# EUROPEAN PATENT SPECIFICATION

(11) **EP 3 225 087 B1**
(45) Date of publication and mention of the grant of the patent: **27.02.2019**
(21) Application number: 16205182.5
(22) Date of filing: 19.12.2016
(51) Int. Cl.: A01B 33/02

(54) **WALKING TYPE TILLER**
BODENFRÄSE VOM SCHIEBETYP
MOTOCULTEUR

(30) Priority: 29.03.2016 JP 2016066582
(43) Date of publication of application: 04.10.2017
(73) Proprietor: Iseki & Co., Ltd., Matsuyama-shi, Ehime 799-2692 (JP)
(72) Inventor: KURODA, Kyosei, Iyo-gun, Ehime 791-2193 (JP); TOMIHISA, Akira, Iyo-gun, Ehime 791-2193 (JP); MIYAUCHI, Masao, Iyo-gun, Ehime 791-2193 (JP); NAKAGAWA, Hideaki, Iyo-gun, Ehime 791-2193 (JP); USHIRODA, Tatsuya, Iyo-gun, Ehime 791-2193 (JP); YOSHII, Akira, Iyo-gun, Ehime 791-2193 (JP)
(74) Representative: Spengler, Robert

(56) References cited:
- JP-A- 2011 063 224
- JP-A- 2011 182 758
- US-A- 4 493 404

## Description

### BACKGROUND OF THE INVENTION

### Field of the Invention

The present invention relates to a walking type tiller.

### Related Art of the Invention

Conventionally, a walking type tiller which tills a farm field is known (see, for example, a patent document JP publication No. 2011-182758).

The conventional walking type tiller is provided with a parking brake device which applies resistance to a rotation of the traveling wheels.

### SUMMARY OF THE INVENTION

### Problems to be Solved by the Invention

However, in the case of the configuration of the above described conventional walking type tiller, by applying the resistance to the rotation of the traveling wheels, the parking brake is actuated. Additionally, since the conventional parking brake device is a brake mechanism of the drum type, the resistance is applied to the rotation of the traveling wheels by the frictional force occurring in a brake shoe. Therefore, the problem with the conventional walking type tiller is that there are cases where the parking brake is not capable of surely locking of the movement of the traveling wheels on a slope or an inclined farm field.

In view of the above-mentioned problem of the conventional walking type tiller, an object of the present invention is to provide a walking type tiller which is capable of surely locking the movement of the traveling wheels even when the walking type tiller is on the slope or the inclined farm field, and whose parking brake operation part can be operated easily.

### Means for Solving the Problems

The 1^{st} aspect of the present invention is a walking type tiller comprising:
traveling wheels (4L, 4R);
an operating handle (17) which is arranged behind the traveling wheels (4L, 4R);
tilling claw (6) which tills a farm filed;
an engine (15) which rotates the traveling wheels (4L, 4R) and the tilling claw (6); and
a transmission case (2) housing a transmission mechanism which transmits driving power from the engine to the traveling wheels (4L, 4R) and the tilling claw (6),
characterized in that the walking type tiller comprises
a driving shaft of the transmission mechanism (40), whose one end part (41) protrudes outside the transmission case (2), the one end part (41) being provided with an engaged part (41a);
a parking brake engaged/disengaged device (310) which has an engagement member (301) capable of engaging with the engaged part (41a) of the driving shaft (40), and by which a rotation of the driving shaft (40) is switched between a stopping state and a releasing state; and
a parking brake operation part (70) which performs an operation so that the parking brake engaged/disengaged device (310) stops the rotation of the driving shaft (40),
wherein the parking brake operation part (70) is disposed on the operating handle (17), and
in a case where the parking brake operation part (70) is operated, the engagement member (301) engages with the engaged part (41a), so that the rotation of the driving shaft (40) is stopped.

According to the above described configuration, the sure locking of the driving shaft (40) of the transmission mechanism is performed without slipping, and the operation of the parking brake engaged/disengaged device (310) is performed surely. Additionally, the operation of a parking brake operation part (70) becomes easy.

The 2^{nd} aspect of the present invention is the walking type tiller according to the 1^{st} aspect of the present invention, comprising:
a height adjusting part (81) which adjusts a height of the operating handle (17); and
a height operating part (80) which operates the height adjusting part (81),
wherein the operating handle (17) has a right side grip part (17R) and a left side grip part (17L),
the parking brake operation part (70) is disposed under any one of the right side grip part (17R) and the left side grip part (17L), and
the height operating part (80) is disposed under another one of the right side grip part (17R) and the left side grip part (17L).

By means of this, the operability improves.

The 3^{rd} aspect of the present invention is the walking type tiller according to the 1^{st} or 2^{nd} aspect of the present invention, comprising:
a belt transmission mechanism (200) which is disposed between the engine (15) and the transmission mechanism, and which is configured in such a manner to be capable of transmitting the driving power from the engine (15) to the transmission mechanism by a belt (203), and
a connection member (270) which transmits the operation performed by the parking brake operation part (70) to the parking brake engaged/disengaged device (310),
wherein the connection member (270) is arranged so as to pass between the belt (203) and the transmission case (2).

By means of this, the connection member (270) can be prevented from protruding outside body of the walking type tiller.

### Advantageous Effects of the Invention

According to the present invention, it can be achieved to provide a walking type tiller which is capable of surely locking the movement of the traveling wheels even when the walking type tiller is on the slope or the inclined farm field, and whose parking brake operation part can be operated easily.

### BRIEF DESCRIPTION OF THE DRAWINGS

FIG. 1 is a left side view of a walking type tiller according to Embodiment of the present invention;
FIG. 2 is a plan view of an operating handle of the walking type tiller according to the present Embodiment of the present invention;
FIG. 3 is a left side view of an operating handle of the walking type tiller according to the present Embodiment of the present invention;
FIG. 4 is a schematic right side view of a transmission case of the walking type tiller according to the present Embodiment of the present invention;
FIG. 5 is a schematic left side view which indicates a main part of the walking type tiller whose belt left cover is removed and explains a belt transmission mechanism and a main clutch according to the present Embodiment of the present invention;
FIG. 6 is a schematic sectional view of the transmission case for explaining a differential lock clutch of the walking type tiller according to the present Embodiment of the present invention;
FIG. 7 is a schematic sectional view of the transmission case for explaining a rotary clutch of the walking type tiller according to the present Embodiment of the present invention;
FIG. 8 is a partial enlarged right side view of the transmission case which is provided with a parking brake mechanism of the walking type tiller according to the present Embodiment of the present invention;
FIG. 9 is a partial enlarged schematic plan view of the transmission case which is provided with the parking brake mechanism of the walking type tiller according to the present Embodiment of the present invention;
FIG. 10 is an exploded schematic perspective view of a parking brake mechanism of the walking type tiller according to the present Embodiment of the present invention;
FIG. 11(a) is a right side view of a main part of the parking brake mechanism of the walking type tiller according to the present Embodiment of the present invention, in which a parking brake engaged/disengaged device is set to be in a "brake disengaged-state";
FIG. 11(b) is a right side view of the main part of the parking brake mechanism of the walking type tiller according to the present Embodiment of the present invention, in which the parking brake engaged/disengaged device is set to be in a "brake engaged-state";
FIG. 12(a) is a schematic plan view of the parking brake mechanism for explaining a state where a parking brake arm body is turned to a "brake engaged-side" in a state where the operator's hand is released from a main clutch lever of the walking type tiller according to the present Embodiment of the present invention;
FIG. 12(b) is a schematic right side view of the parking brake mechanism shown by FIG. 12(a);
FIG. 13(a) is a schematic plan view of the parking brake mechanism for explaining a state where the parking brake arm body is forcibly turned to a "brake disengaged-side (brake released-side)" by pushing down the main clutch lever according to the present Embodiment of the present invention;
FIG. 13(b) is a schematic right side view of the parking brake mechanism shown by FIG. 13(a);
FIG. 14(a) is a partial schematic plan view of the right side part of the transmission case in a state where a rotary/differential lock clutch lever is moved to a "disconnected side";
FIG. 14(b) is a partial schematic side view of the right side part of the transmission case shown by FIG. 14(a);
FIG. 15(a) is a partial schematic plan view of the right side part of the transmission case in a state where the rotary/differential lock clutch lever is moved to a "connected side";
FIG. 15(b) is a partial schematic side view of the right side part of the transmission case shown by FIG. 15 (a);
FIG. 16(a) is a partial schematic plan view of the right side part of the transmission case in a case where the rotary/differential lock clutch lever is moved to a "disconnected side", after a rotary clutch fixing pin is inserted in the superposed holes where an upper side hole for fixing rotary clutch and a lower side hole for fixing rotary clutch are in a state superposed on each other by allowing the rotary/differential lock clutch lever to be moved to a "connected side";
FIG. 16(b) is a partial schematic side view of the right side part of the transmission case shown by FIG. 16(a); and
FIG. 17(a) is a schematic plane view of the walking type tiller for explaining a course of a parking brake lever cable of the walking type tiller of the present Embodiment; and
FIG. 17(b) is a schematic right side view which indicates around the transmission case of the walking type tiller for explaining of the course of the parking brake lever cable of the walking type tiller of the present Embodiment.

### Description of Symbols

- 1: body of the walking type tiller
- 2: transmission case
- 2a: front side case
- 2b: rear side case
- 3: support frame
- 4L: left traveling wheel
- 4R: right traveling wheel
- 6: tilling claw
- 7: tilling device
- 15: engine
- 16L: belt left cover
- 16R: belt right cover
- 17: operating handle
- 18: main clutch lever
- 20: rotary/differential lock clutch lever
- 40: traveling second shaft
- 41a: parking brake groove
- 70: parking brake engaged-operation lever
- 80: handle height change lever
- 100: walking type tiller
- 301: parking brake pin
- 310: parking brake engaged/disengaged device
- 311: parking brake arm body
- 330: bracket

### PREFERRED EMBODIMENTS OF THE INVENTION

Hereinafter, a configuration and operation with respect to a walking type tiller 100 as one example of a walking type tiller according to the present invention will be described with reference to drawings.

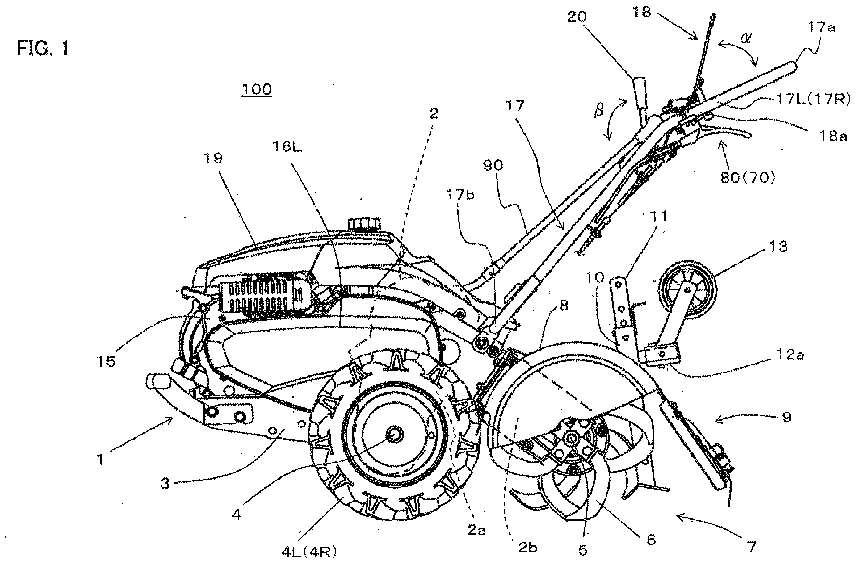

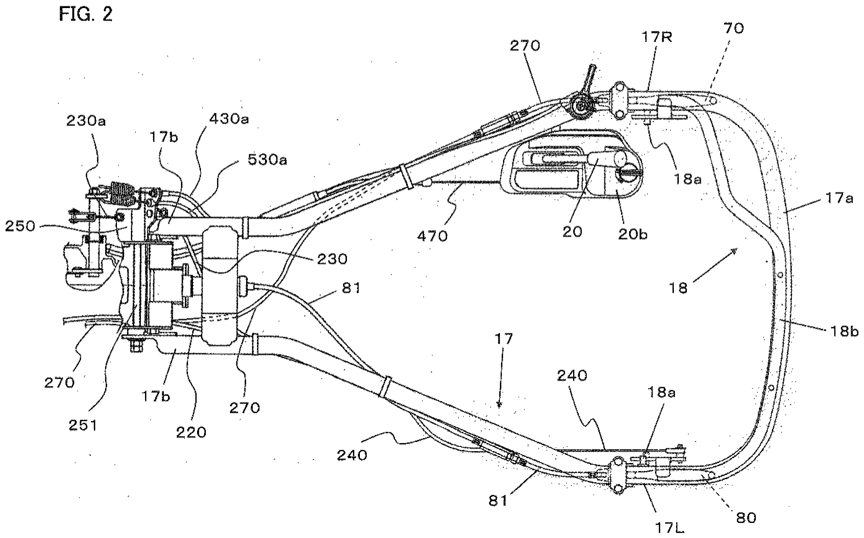

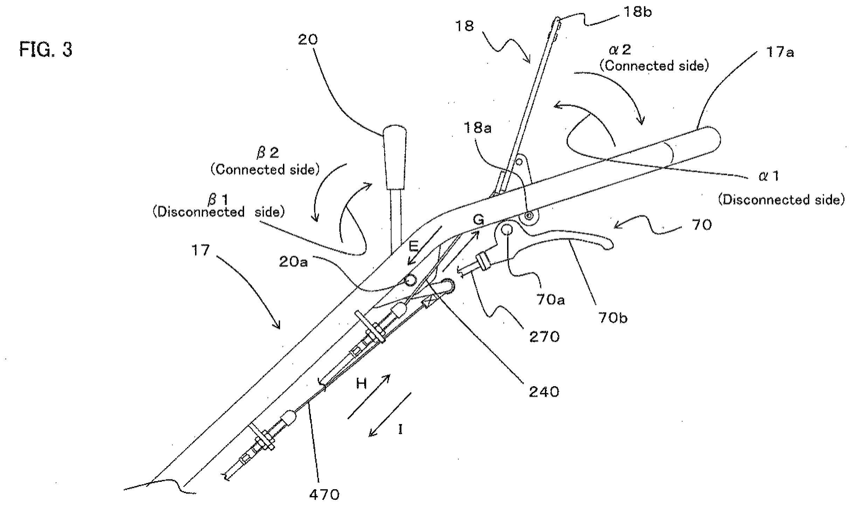

FIG. 1 is a left side view of the walking type tiller 100 according to the present embodiment of the present invention, FIG. 2 is a plan view of an operating handle of the walking type tiller 100 according to the present embodiment, and FIG. 3 is a left side view of the operating handle of the walking type tiller 100.

Incidentally, in FIG. 3, the illustration of a handle height change lever 80 is omitted.

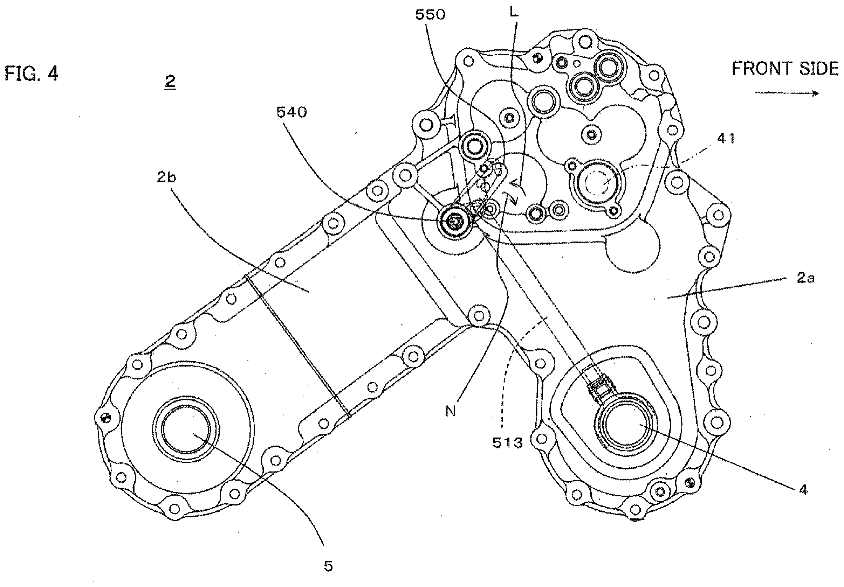

FIG. 4 is a schematic right side view of a transmission case of the walking type tiller 100.

First of all, the configuration of the walking type tiller 100 of the present embodiment will be described with reference to FIGs. 1 to 4 mainly.

As shown in FIGs. 1 and 4, a body 1 of the walking type tiller 100 is provided with a transmission case 2 which is formed in an approximately inverted V-shaped form in a right side view, a support frame 3 which is disposed in front side of the transmission case 2, and the like. The lower part of a front side case 2a of the transmission case 2 is provided with an axle 4 which supports a left traveling wheel 4L and a right traveling wheel 4R, and the lower part of a rear side case 2b of the transmission case 2 is provided with a rotor shaft 5 which supports plural tilling claws 6 to configure a tilling device 7.

An upper side of the tilling device 7 is covered by a rotary cover 8, and a rear side of the tilling device 7 is covered by a rear cover 9. The rear end side of the rotary cover 8 is provided with a resistance bar holder 10, and a resistance bar 11 is held by the resistance bar holder 10 to be freely adjusted in height. The resistance bar holder 10 is provided with a tail wheel holder 12a, and a tail wheel 13 is held by the tail wheel holder 12a to be freely adjusted in height.

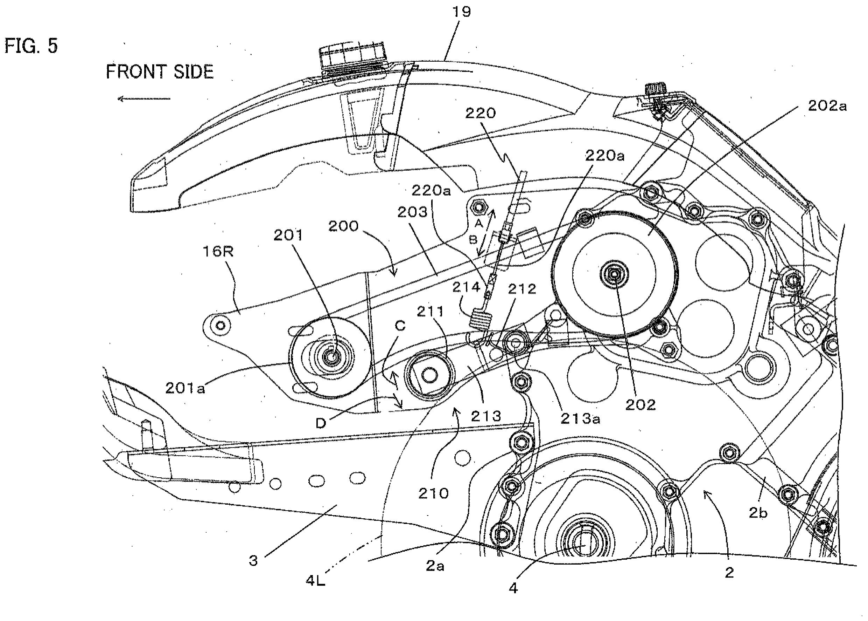

The support frame 3 is provided with an engine 15, and engine output is transmitted to a transmission mechanism in the transmission case 2 via a belt transmission mechanism 200 (see FIG. 5). Reference numeral 16L (see FIG. 1) denotes a belt left cover which covers the belt transmission mechanism 200 from the left side surface thereof, and reference numeral 16R (see FIG. 5) denotes a belt right cover which covers the belt transmission mechanism 200 from the right side surface thereof. A fuel tank 19 is mounted above the engine 15.

A base part 17b of the operating handle 17 is turnably mounted on the upper part of the transmission case 2, and the operating handle 17 extending rearwardly, obliquely and upwardly from the body 1 of the walking type tiller 100 is arranged (see FIG. 1). The operating handle 17 is formed into a loop-like shape in a plan view (see FIG. 2) by allowing a rear end grip part 17a of the operating handle 17 to be connected between the rear end side of a right side grip part 17R located in the right side and the rear end side of a left side grip part 17L located in the left side.

A parking brake engaged-operation lever 70 which will be described later is turnably disposed under the right side grip part 17R of the operating handle 17, and the handle height change lever 80 is turnably disposed under the left side grip part 17L of the operating handle 17. By means of this, the operability improves.

A main clutch lever 18 which will be described later is disposed vertically turnably about a pair of right and left first horizontal shafts 18a as axes, which are disposed in a lateral and horizontal direction under the respective lower surfaces of the right side grip part 17R and the left side grip part 17L of the operating handle 17 (see FIGs. 1 and 2).

A rotary/differential lock clutch lever 20 which will be described later is disposed in the neighborhood of the right side grip part 17R of the operating handle 17.

Here, the handle height change lever 80 will be described by using FIG. 2.

Here, when the operator grips the handle height change lever 80, a pin member (not shown) which is disposed on the tip portion of a handle height change cable 81 is moved into an opposed direction to the press power that always acts so as to be pulled out from any one of a plural holes for positioning (not shown) which are arranged on a part of the stay plate 250 in a lengthwise direction. By means of this, the operating handle 17 gets into a vertically turnable state about a handle turnable shaft 251, which is turnably supported by the stay plate 250. After that, in a case where the operator turns the operation handle 17 which is in the vertically turnable state upward or downward while releasing the handle height change lever 80, the pin member is moved to another hole among the plural holes for positioning and is inserted in another hole for positioning by the press power that always acts on the pin member, so that the height of the operating handle 17 can be changed.

By the way, the handle height change lever 80 of the present embodiment is one example of a height operating part of the present invention. The configuration which includes the handle height change cable 81 and the pin member (not shown) disposed on the tip portion of the handle height change cable 81 of the present embodiment is one example of a height adjusting part of the present invention.

The main clutch lever 18 is configured so that the vertical turning action of the main clutch lever 18 about the first horizontal shaft 18a (see arrow α in FIG. 1) is interlocked with the actions for the connection and disconnection of the main clutch 210 in the belt transmission mechanism 200 (see FIG. 5). When the main clutch lever 18 is pushed down to be overlapped with the rear end grip part 17a of the operating handle 17 by the operator, the main clutch 210 is set to be connected, and when the main clutch lever 18 is released by the operator, the main clutch 210 is set to be disconnected by the restoring force of the spring.

Incidentally, in the present embodiment, in a case where the main clutch 210 is set to be connected, the driving power which is provided from the engine 15 is transmitted to the axle 4 and the rotor shaft 5, and in a case where the main clutch 210 is set to be disconnected, the driving power from the engine 15 is not transmitted to the axle 4 and the rotor shaft 5.

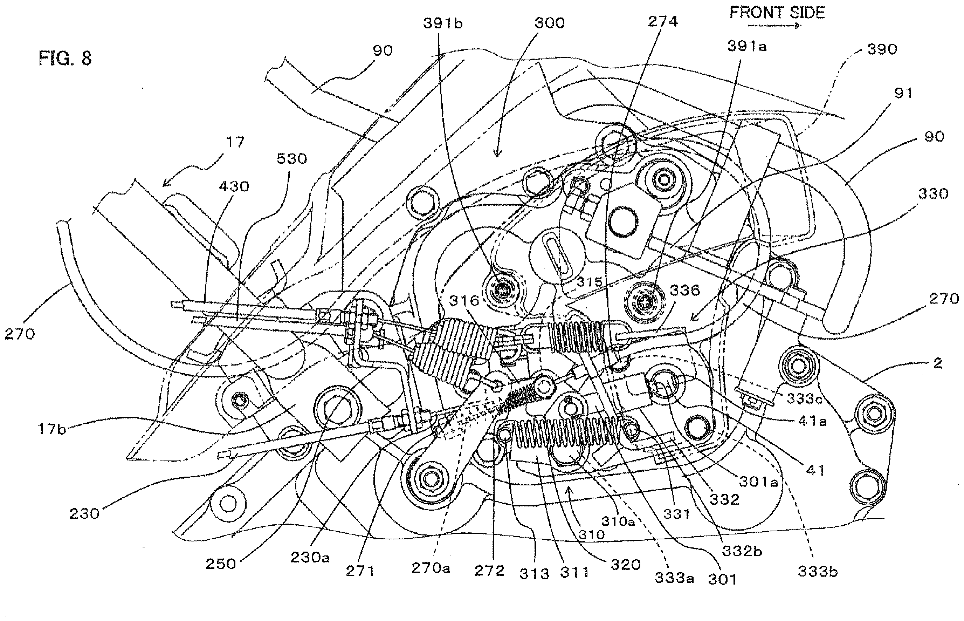

Moreover, a parking brake mechanism 300 which is capable of surely locking the driving shaft of the traveling system is disposed on the right side of the transmission case 2 of the walking type tiller 100. The parking brake mechanism 300 (see FIG. 8) is configured so as to be interlocked with the action of the main clutch lever 18 for performing the connection or disconnection of the main clutch 210 (see FIG. 5). This matter will be described later in detail.

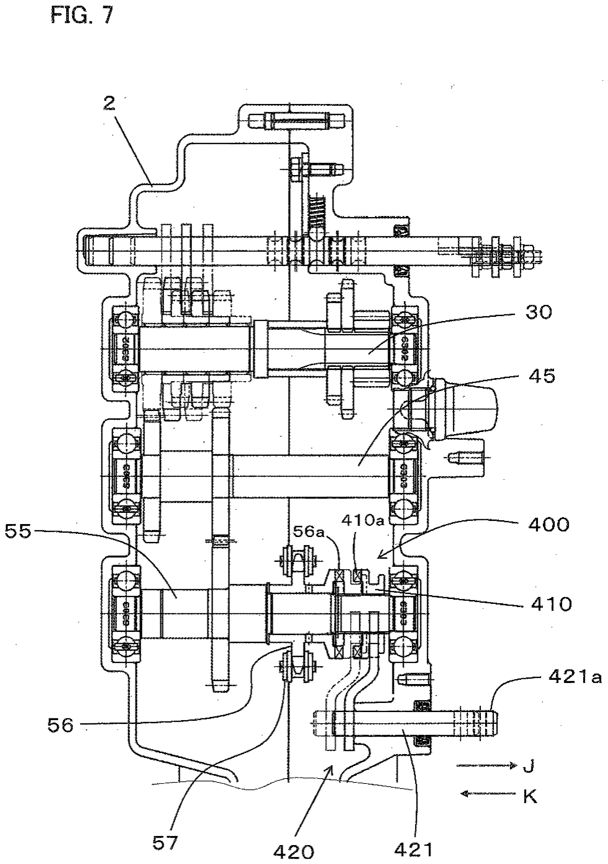

Additionally, a rotary/differential lock clutch lever 20 is disposed on the left inner side of the right side grip part 17R of the operating handle 17 of the walking type tiller 100 (see FIGs. 1 and 2). The vertical turning action of the rotary/differential lock clutch lever 20 about a second horizontal shaft 20a (see arrows β1 and β2 in FIG. 3) is interlocked with the actions of the connection and disconnection for both the rotary clutch 400 (see FIG. 7) and the differential lock clutch 500 (see FIG. 5). In a state where the main clutch 210 is set to be connected, basically, the driving power from the engine 15 is transmitted to the rotor shaft 5 when the rotary clutch 400 is set to be connected, and the driving power from the engine 15 is not transmitted to the rotor shaft 5 when the rotary clutch 400 is set to be disconnected. The differential lock is operated to the left traveling wheel 4L and the right traveling wheel 4R (that is, the differential function is stopped) when the differential lock clutch 500 is set to be connected, and the differential lock is released when the differential lock clutch 500 is set to be disconnected (that is, the differential function is operated). This matter will be also described later in detail.

Incidentally, the differential function means the function for generating a difference in the rotational frequency between the inside traveling wheel and the outside traveling wheel to perform a smooth turn when the walking type tiller 100 is allowed to, for example, make a U-turn.

The parking brake engaged/disengaged device 310 of the present embodiment is one example of a parking brake engaged/disengaged device of the present invention. Additionally, the parking brake engaged-operation lever 70 of the present embodiment is one example of a parking brake operation part of the present invention.

Here, the above described main clutch 210 and the belt transmission mechanism 200 will be further described in detail with reference to FIG. 5.

FIG. 5 is a schematic left side view which indicates a main part of the walking type tiller 100 whose belt left cover 16L is removed and is used for explaining the belt transmission mechanism 200 and the main clutch 210. The illustration of the external form of the engine 15 is omitted partially.

As shown in FIG. 5, the belt transmission mechanism 200 is provided with a first sprocket 201a which is fixed to an engine output shaft 201, a second sprocket 202a which is fixed to a transmission input shaft 202, a transmission belt 203 which is suspended in the released state between the first sprocket 201a and the second sprocket 202a, and the main clutch 210. The main clutch 210 is configured so that the driving power from the engine 15 is allowed to be transmitted to the transmission mechanism in the transmission case 2 or not to be transmitted to the transmission mechanism by controlling the tension of the transmission belt 203 which is suspended in the released state.

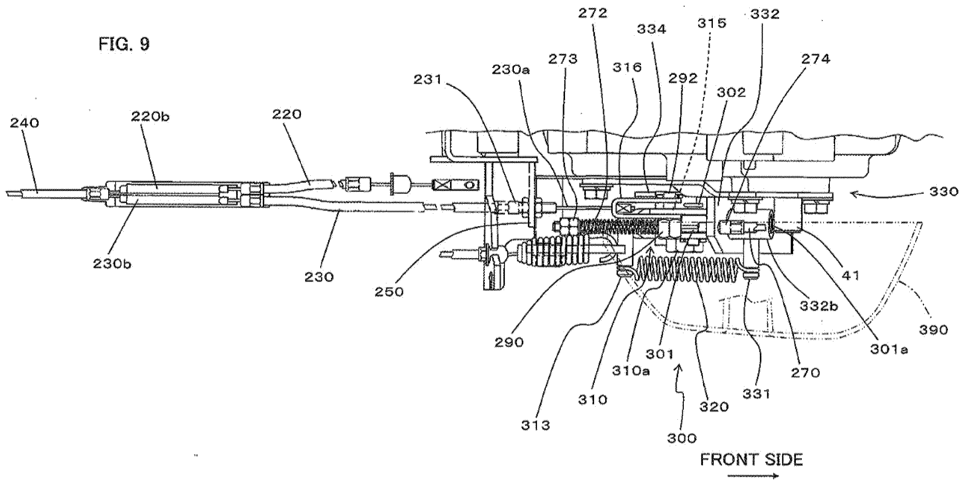

As shown in FIG. 5, the main clutch 210 is configured by a tension arm 213, a tension spring 214, and the like. One end part of the tension arm 213 is turnably provided with a tension roller 211, and the other end part thereof is turnably supported by a shaft part 213a. One end part 220a of a main clutch cable 220 is connected to the neighborhood of the center part of the tension arm 213 through the tension spring 214 (see FIG. 5), and the other end part 220b (see FIG. 9) thereof is connected to a main clutch/brake cable 240 (see FIG. 9) which is connected to the main clutch lever 18. Additionally, the tension roller 211 is arranged abuttingly to the transmission belt 203. Additionally, the tension arm 213 is provided with a torque spring 212 which always generates torque that turns the tension roller 211 in the direction to separate the tension roller 211 from the transmission belt 203 about the shaft part 213a.

According to the above described configuration, when the main clutch lever 18 is pushed down to be overlapped with the rear end grip part 17a of the operating handle 17 by the operator (see FIGs. 1 and 2), the main clutch 210 is set to be connected (that is, a connected state). At this time, as shown in FIG. 5, the main clutch cable 220 is pulled in the direction of an arrow A, the tension arm 213 turns clockwise about the shaft part 213a (see an arrow C in FIG. 5), the tension roller 211 pushes up the transmission belt 203, and the transmission belt 203 adheres to a first sprocket 201a and a second sprocket 202a. As a result, the driving power from the engine output shaft 201 is transmitted to the transmission input shaft 202. At this time, the tension spring 214 is elongated, and the torque spring 212 generates the torque which turns the tension roller 211 in the direction to separate the tension roller 211 from the transmission belt 203 about the shaft part 213a.

According to the above described configuration, when the operator releases the operator's hand from the main clutch lever 18 which is pushed down to be overlapped with the rear end grip part 17a of the operating handle 17 (see FIG. 1), the main clutch cable 220 loosens, the tension spring 214 shrinks (see FIG. 5), and the tension arm 213 is turned counterclockwise about the shaft part 213a (see an arrow D in FIG. 5) by the torque of the torque spring 212, so that the main clutch 210 gets into a disconnected state. That is, at this time, as shown in FIG. 5, the main clutch cable 220 is pulled in the direction of an arrow B, the tension arm 213 is turned counterclockwise about the shaft part 213a (see an arrow D in FIG. 5), and the tension roller 211 separates from the transmission belt 203. As a result, the transmission belt 203 suspended between the first sprocket 201a and the second sprocket 202a gets into a loose state. By means of this, the driving power from the engine output shaft 201 is not transmitted to the transmission input shaft 202.

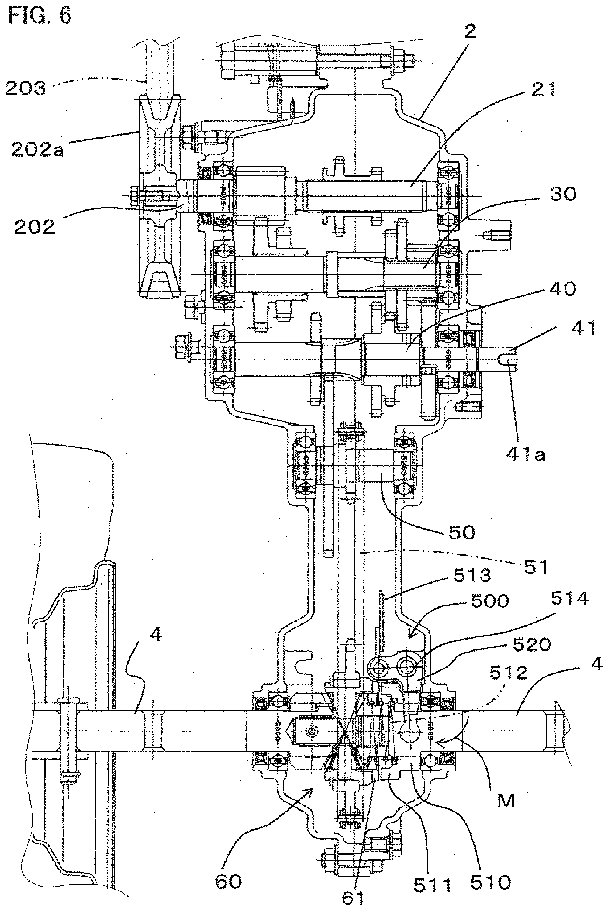

Next, the differential lock clutch 500 which is disposed in the transmission case 2 and the rotary clutch 400 will be described with reference to FIGs. 6 and 7.

FIG. 6 is a schematic sectional view of the transmission case 2 for explaining the differential lock clutch 500 of the walking type tiller 100, and FIG. 7 is a schematic sectional view of the transmission case 2 for explaining the rotary clutch 400 of the walking type tiller 100.

As shown in FIG. 6, an input shaft 21 with a transmission input shaft 202 being fixed to one end part of the input shaft 21, a traveling first shaft 30 to which the driving power from the input shaft 21 is transmitted via the predetermined gear mechanism, a traveling second shaft 40 which transmits the driving power from the traveling first shaft 30 to the traveling system via the predetermined gear mechanism, and a travel third shaft 50 which transmits the driving power from the traveling second shaft 40 to the traveling system via the predetermined gear mechanism are disposed in the transmission case 2. Additionally, in the transmission case 2, a differential mechanism 60 which is disposed at the center position in the left and right direction of the axle 4 as a reference, and a differential lock clutch 500 which switches on and off the differential function of the differential mechanism 60 and is disposed in the neighborhood of the differential mechanism 60 are arranged, and also a traveling system chain belt 51 for transmitting the driving power is installed over between the travel third shaft 50 and the differential mechanism 60.

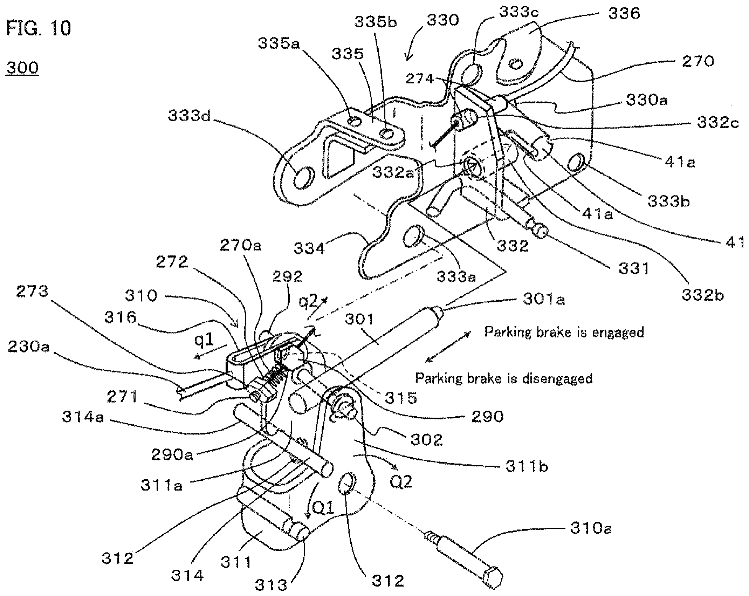

As shown in FIG. 6, one end part 41 of the traveling second shaft 40 protrudes from the right side surface of the transmission case 2 to the outside thereof, and the tip part of the one end part 41 is provided with two parking brake grooves 41a and 41a (see FIG. 10). This matter will be described later in detail.

By the way, the traveling second shaft 40 of the present embodiment is one example of a driving shaft of a transmission mechanism of the present invention, and the parking brake groove 41a of the present embodiment is one example of an engaged part of the driving shaft of the present invention.

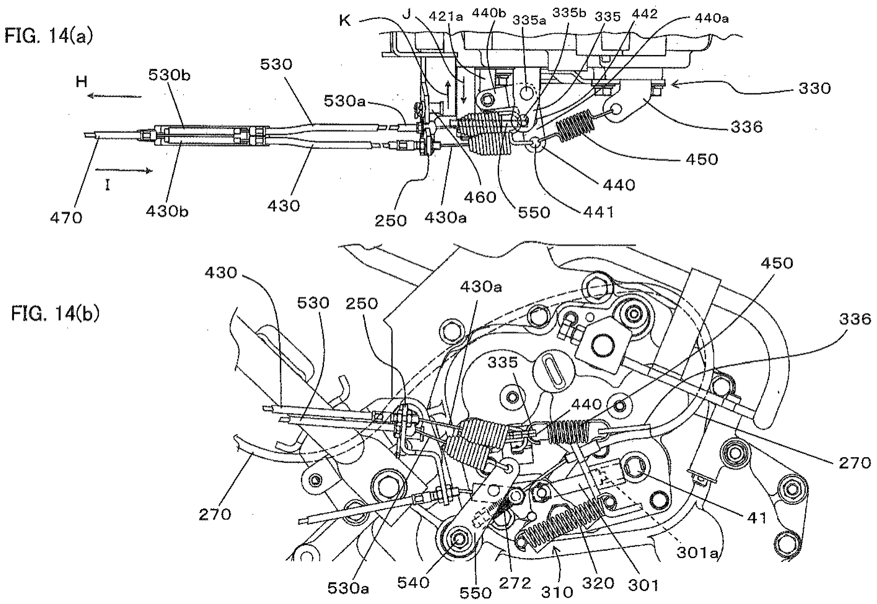

As shown in FIG. 6, the differential lock clutch 500 is constituted by a differential lock clutch body 510, a spring member 512, and a differential lock clutch arm 520. The differential lock clutch body 510 is provided with second claws 511 which can be engaged with first claws 61 which are disposed on the differential mechanism 60, and is connected to the axle 4 by spline fitting. The spring member 512 is arranged between the differential mechanism 60 and the differential lock clutch body 510, and constantly energizes the differential lock clutch body 510 in the direction away from the differential mechanism 60. The differential lock clutch arm 520 is arranged in the transmission case 2 turnably about a clutch arm shaft 514, one end part of the differential lock clutch arm 520 is connected to the differential lock clutch body 510, and the other end part thereof is connected to a differential lock arm shaft 540 which will be described later (see FIG. 4 and FIG. 14(b)) via a differential lock connecting member 513 (see FIG. 4).

In FIG. 6, the second claws 511 of the differential lock clutch body 510 are located away from the first claws 61 of the differential mechanism 60. Therefore, FIG. 6 shows the state where the differential lock clutch 500 is set to be in a disconnected state, that is, the differential function is operated.

Additionally, as shown in FIG. 7, a rotor first shaft 45 which transmits the driving power from the traveling first shaft 30 to the tilling system via the predetermined gear mechanism, and a rotor second shaft 55 which transmits the driving power from the rotor first shaft 45 to the tilling system via the predetermined gear mechanism are disposed in the transmission case 2. Additionally, in the transmission case 2, a rotor first sprocket 56 which is connected by freely fitting nearly at the center position in the left and right direction of the rotor second shaft 55 as a reference, and a rotary clutch 400 which switches on and off the transmission of the driving power from the rotor second shaft 55 to the rotor first sprocket 56 are arranged.

Additionally, as shown in FIG. 7, rotary clutch 400 is constituted by a rotary clutch body 410 and a rotary clutch shifter 420. The rotary clutch body 410 is connected to the rotor second shaft 55 by spline fitting, and has rotary clutch claws 410a which are arranged in an engageable manner with rotor first sprocket claws 56a disposed on the rotor first sprocket 56. The rotary clutch shifter 420 moves the rotary clutch body 410 along the axis direction of the rotor second shaft 55. One end part 421a of the shifter shaft 421 which is one part of the rotary clutch shifter 420 is protruded from the transmission case 2 to the outside thereof, and is connected to a rotary clutch arm 440 which will be described later (see FIG. 14(a)).

When the shifter shaft 421 is slid in the direction of an arrow K, the rotor first sprocket claws 56a are engaged with the rotary clutch claws 410a, and the rotary clutch 400 gets into a connected state. When the shifter shaft 421 is slid in the direction of an arrow J, the rotary clutch claws 410a are separated from the rotor first sprocket claws 56a, and the rotary clutch 400 gets into a disconnected state.

A tilling system chain belt 57 for transmitting the driving power to the rotor shaft 5 is installed over between the rotor first sprocket 56 which is arranged on the rotor second shaft 55 and the rotor second sprocket (not shown) which is arranged on the rotor shaft 5 as shown in FIG. 7.

Next, the configuration of the parking brake mechanism 300 of the present embodiment will be mainly described more concretely with reference to FIG s . 8 to 11(b).

FIG. 8 is a partial enlarged right side view of the transmission case 2 which is provided with the parking brake mechanism 300, FIG. 9 is a partial enlarged schematic plan view of the transmission case 2 which is provided with the parking brake mechanism 300, and FIG. 10 is an exploded schematic perspective view of the parking brake mechanism 300 of the walking type tiller 100. In FIG. 9, a main part which is necessary for explaining the parking brake mechanism 300 is shown, but the other parts which include, for example, a rotary clutch arm support member 335, a return spring holder 336, and the like which will be described later are omitted.

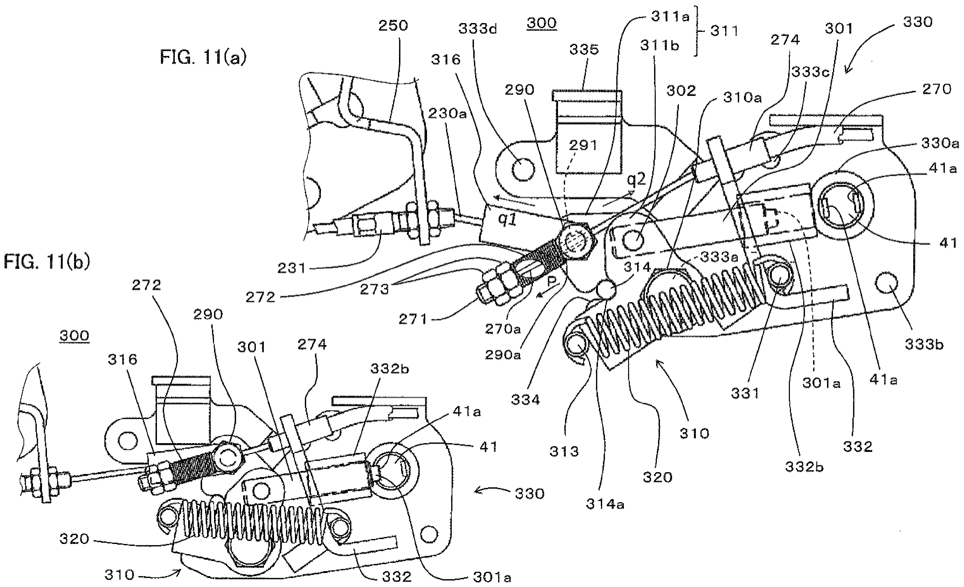

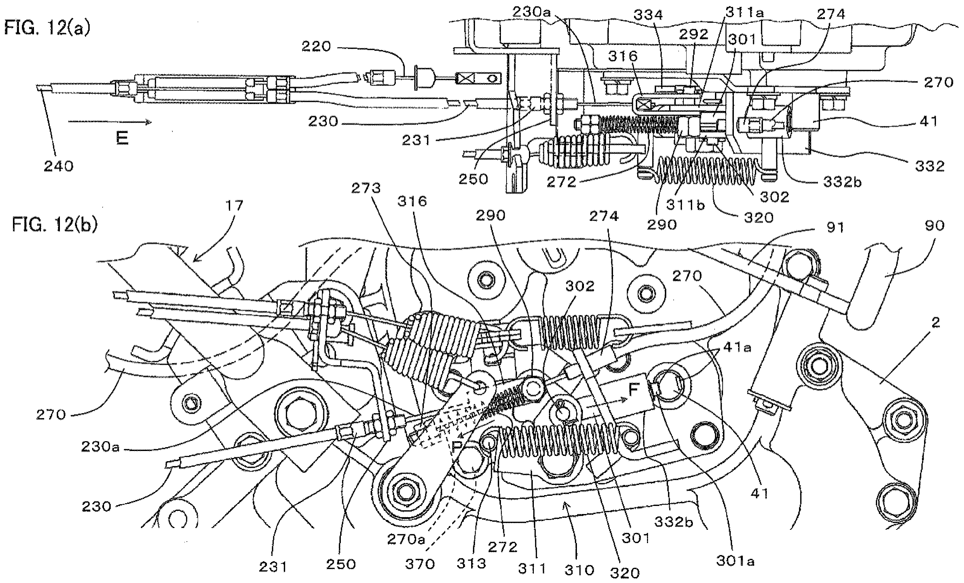

FIG. 11(a) is a right side view of a main part of the parking brake mechanism 300 of the walking type tiller 100 according to the present embodiment of the present invention, in which a parking brake engaged/disengaged device 310 is set to be in a "brake disengaged-state", and the main part of the parking brake mechanism 300 includes the parking brake engaged/disengaged device 310, a bracket 330, and the like. FIG. 11(b) is a right side view of the main part of the parking brake mechanism 300 of the walking type tiller 100, in which the parking brake engaged/disengaged device 310 is set to be in a "brake engaged-state". By the way, FIG. 11(b) is the right side view of a main part of the parking brake mechanism 300 in the state where the operator is gripping the parking brake engaged-operation lever 70, but each of FIGs. 12(a) and 12(b) indicates the parking brake mechanism 300 in the state where the operator's hand is released from the parking brake engaged-operation lever 70 after the state of the parking brake engaged/disengaged device 310 is switched from the "brake disengaged-state" to the "brake engaged-state" by gripping the parking brake engaged-operation lever 70 with the operator's hand.

As shown in FIGs. 8 and 10, one end part 41 of the traveling second shaft 40 protrudes from the right side surface of the transmission case 2 to the outside thereof through a hole 330a which is disposed on a bracket 330 described later, and two parking brake grooves 41a and 41a are formed on the outer peripheral surface of the tip part of the one end part 41 at positions axially opposing to each other.

As shown in FIGs. 8 and 10, the parking brake engaged/disengaged device 310 which has a parking brake pin 301 is turnably disposed on the right side surface of the transmission case 2 by a bolt 310a as an axis. The parking brake pin 301 is provided with the tip part 301a which is engaged with the parking brake groove 41a and is formed into a projection shape such as a truncated cone. Incidentally, the shape of the tip part 301a is not limited to the projection shape such as a truncated cone, and the tip part 301a may be formed into, for example, a projection shape of the spherical surface form.

As shown in FIGs. 10 and 11(a), the parking brake engaged/disengaged device 310 is provided with a parking brake arm body 311, the parking brake pin 301 which is described above, a connecting pin 302, a bifurcated member 316, and a brake lever cable connecting pin 290. The parking brake arm body 311 has a first arm 311a which is located in the right side of the transmission case 2 and a second arm 311b which is located in the right side of the first arm 311a, and the first arm 331a is connected to the second arm 331b integrally in each rear part thereof so as to be formed in an approximately U-shaped form in a plane view. The rear end part of the parking brake pin 301 is turnably connected to the parking brake arm body 311 through the connecting pin 302. The bifurcated member 316 is formed in an approximately U-shaped form in a plane view, and is connected to the tip part 230a of the brake cable 230 which is connected to the main clutch lever 18 side. The brake lever cable connecting pin 290 has a head part of the hexagon pillar shape and a body part 292 of the column shape, holds the tip part 270a of the brake lever cable 270, and connects the bifurcated member 316 to the first arm 311a turnably.

The connecting pin 302 is turnably arranged between the first arm 311a and the second arm 311b in a manner that a left end part of the connecting pin 302 penetrates the first arm 311a and a right end part of the connecting pin 302 penetrates the second arm 311b. Additionally, the connecting pin 302 is parallel to the one end part 41 of the traveling second shaft 40, and intersects perpendicularly with a center axis of the parking brake pin 301.

As shown in FIG. 11(a), the head part of the brake lever cable connecting pin 290 is provided with a through-hole 291 which penetrates two surfaces which are opposite to each other on the six side surfaces of the hexagon pillar of the head part. The tip part 270a of the brake lever cable 270 penetrates the through-hole 291 from the front side of the body 1 of the walking type tiller 100 to the back side thereof, and is provided with a double nut mounting member 271 having a male-screw part on the surface thereof. Additionally, a compression coil spring 272 is arranged between a double nut 723 which is fastened to the double nut mounting member 271 and a first side surface 290a which has a back side opening part of the through-hole 291. The double nut 723 is constantly pressurized by an elastic force (that is, an extension force) of the compression coil spring 272 so that the double nut 723 goes away from the head part of the brake lever cable connecting pin 290. That is, the tip part 270a of the brake lever cable 270 is constantly pushed in the direction of an arrow P (see FIG. 11(a)).

By the way, the double nut 273 has a connecting function to connect the tip part 270a side of the brake lever cable 270 with the head part of the brake lever cable connecting pin 290 and an adjusting function of the elastic force of the compression coil spring 272.

Since the first side surface 290a of the head part of the brake lever cable connecting pin 290 is a plane, a front end part of the compression coil spring 272 abuts against the first side surface 290a stably. Therefore, the compression coil spring 272, as shown in FIG. 11(a), is located straight in the obliquely downward and rearward direction of the body 1 of the walking type tiller 100. By means of this, when the compression coil spring 272 is compressed, the compression coil spring 272 can be prevented from being bent and the elastic force which is set beforehand can be obtained efficiently.

Even in a case where the operator's hand is released from the parking brake engaged-operation lever 70 after the state of the parking brake engaged/disengaged device 310 is switched from the "brake disengaged-state" to the "brake engaged-state", as shown in FIG. 12(b), the compression coil spring 272 and the double nut 723 are located approximately straight in the obliquely downward and rearward direction of the body 1 of the walking type tiller 100. Incidentally, because the undersurface of the compression coil spring 272 touches the parking brake arm body 311 or a spring rear pin 313 even if the compression coil spring 272 and the like are greatly slanted downward, the further slant can be prevented.

By means of this, because the compression coil spring 272 and the double nut 273 can be prevented from being greatly slanted downward, the confirmation work of the quantity of the transmission oil by using a transmission oil inspection opening 370 is not disturbed.

Additionally, because the double nut 273 is arranged between the bifurcated member 316 and a long plate-like differential lock arm 550 (see FIG. 14(b)) in a plane view, the double nut 273 does not intervene with the surrounding moving members, so that the movements of the surrounding moving members are not disturbed. The differential lock arm 550 is fixed on a tip part of the differential lock arm shaft 540 which protrudes from the right side surface of the transmission case 2 (see FIGs. 4 and 14(b)). Incidentally, the differential lock arm shaft 540 and the differential lock arm 550 will be described later.

Additionally, in a case where the main clutch lever 18 is pushed down to the direction of the "connected state" (see an arrow α2 in FIG. 3), the tip part 230a of the brake cable 230, which is connected to the first arm 311a through the bifurcated member 316, is pulled to the direction q1 (see FIG. 10), so that the parking brake arm body 311 turns to the direction Q1 (see FIG. 10). Additionally, in a case where the main clutch lever 18 is moved to the direction of the "disconnected state" (see an arrow α1 in FIG. 3), the tip part 270a of the brake lever cable 270, which is connected to the first arm 311a through the head part of the brake lever cable connecting pin 290, is pulled to the direction q2 (see FIG. 10), so that the parking brake arm body 311 turns to the direction Q2 (see FIG. 10). These movements will be further described later with reference to FIGs. 12(a) to 13(b).

Incidentally, the parking brake arm body 311 is provided with a through hole 312 into which a bolt 310a is inserted and a connecting hole 315 into which the body part 292 of the brake lever cable connecting pin 290 is turnably inserted so as to connect the bifurcated member 316 to the first arm 311a turnably (see FIG. 10).

Additionally, the parking brake arm body 311 is provided with a stopper pin 314 and a spring rear pin 313 which one end part of a dead point getting over spring 320 is hooked on and which is arranged behind the through hole 312. The stopper pin 314 is arranged in such a manner that it is allowed to cross the first arm 311a and the second arm 311b of the parking brake arm body 311, and is fixed backward above the through hole 312 and in parallel with the bolt 310a. Additionally, when the parking brake arm body 311 is turned in the direction of the arrow Q1 (see FIG. 10), that is, in a direction where the parking brake engaged/disengaged device 310 is switched to the "brake disengaged-state (brake released-state)", the stopper pin 314 serves as a stopper by abutting on one part of a bracket 330 described later.

As described above, the body part 292 of the brake lever cable connecting pin 290 is turnably inserted into the connecting hole 315. Therefore, even if a turnable range of the parking brake arm body 311 is wide, the movement of the parking brake arm body 311 becomes smooth, because the brake lever cable connecting pin 290 can be turned freely. Here, the turnable range of the parking brake arm body 311 can be indicated by the difference between a first position where the parking brake arm body 311 is turned in the direction of the arrow Q1 (see FIG. 10), that is, in the direction where the parking brake engaged/disengaged device 310 is switched to the "brake disengaged-state (brake released-state)" and a second position where the parking brake arm body 311 is turned in the direction of the arrow Q2 (see FIG. 10), that is, in the direction where the parking brake engaged/disengaged device 310 is switched to the "brake engaged-state".

Additionally, since the tip part 270a of the brake lever cable 270 is always pushed in the direction of the arrow P (see FIG. 11(a)) by the elastic force of the compression coil spring 272, a grip part 70b of the parking brake engaged-operation lever 70 always stays away from the right side grip part 17R in the lower direction, and the slack of the brake lever cable 270 does not occur in the neighborhood of the tip part 270a side of the brake lever cable 270 and the parking brake engaged-operation lever 70 except in a case where the operator grips the parking brake engaged-operation lever 70 with the operator's right hand in order to switch the parking brake to the "brake engaged-state".

Additionally, as described above, by the brake lever cable connecting pin 290, the tip part 230a of the brake cable 230 is connected to the first arm 311a through the bifurcated member 316 and the tip part 270a of the brake lever cable 270 is connected to the first arm 311a through the head part of the brake lever cable connecting pin 290. By means of this, by one brake lever cable connecting pin 290, each tip part of two cables (that is, the tip part 230a of the brake cable 230 and the tip part 270a of the brake lever cable 270) can be connected to the first arm 311a, so that the number of parts can be reduced.

Additionally, as shown in FIGs. 10 and 11(a), the bracket 330 is fixed to the right side surface of the transmission case 2 with four bolts by using bolt insertion holes 333a, 333b, 333c, and 333d (see FIG. 10). An L-shape plate 332 having an L-shape in a right side view is fixed to the right side surface of the bracket 330 by welding in a manner that the L-shape plate 332 is located between the parking brake arm body 311 and the one end part 41 of the traveling second shaft 40 which protrudes from the right side surface of the transmission case 2 to the outside thereof.

Additionally, the L-shape plate 332 is provided with a through hole 332a, a cylindrical guide member 332b which communicates with the through hole 332a and freely slidably supports the parking brake pin 301, and an insertion hole 332c which is located above the through hole 332a. A cable outer holder 274 with a stepped part, which holds the brake lever cable 270, is inserted into the insertion hole 332c. Since the cable outer holder 274 is configured to be capable of being inserted into the insertion hole 332c in the direction from the front side of the body 1 of the walking type tiller 100 to the back side thereof using the stepped part, the cable outer holder 274 is easily mounted and is less prone to fall off.

By the way, the course of the brake lever cable 270 is configured as follows.

The brake lever cable 270 of the present embodiment is one example of a connection member of the present invention.

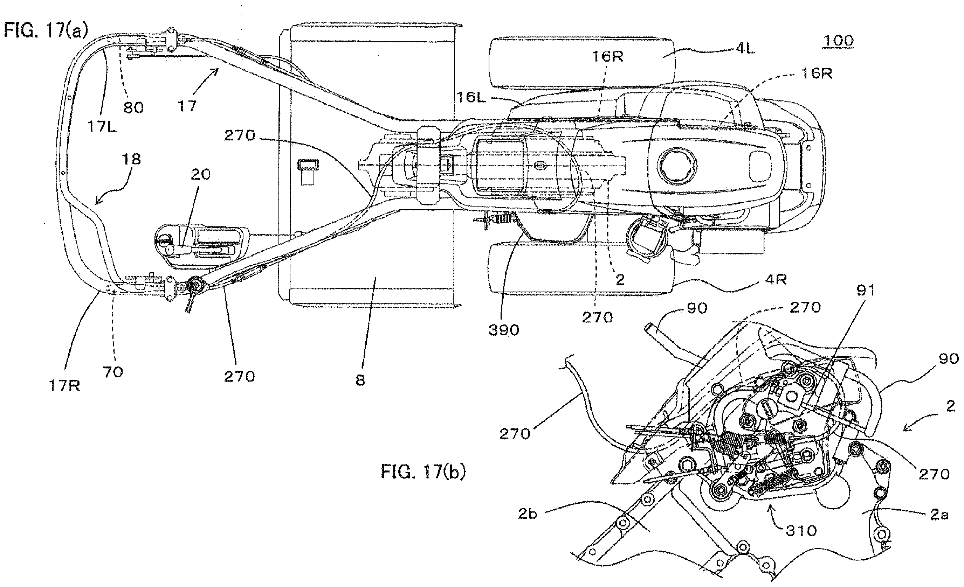

That is, the brake lever cable 270, as shown in FIGs. 17(a) and 17(b), is located from the parking brake engaged-operation lever 70, which is disposed under the right side grip part 17R, along the operating handle 17 which is inclined diagonally downwards from the rear end grip part 17a to the base part 17b (see FIGs. 1 and 2), is located from the right side to the left side of the transmission case 2 (see FIG. 2), and is located forward along a space between the belt left cover 16L which covers the belt transmission mechanism 200 from the left side thereof and the left side surface of the transmission case 2. Thereafter, the brake lever cable 270 is located from the left side to the right side along the upper surface of the transmission case 2, is located to pass through below a shifter arm 91 which is fixed to a tip part of a gear shift operation lever 90 which performs the gear shift operation of the transmission mechanism of the transmission case 2 (see FIGs. 1 and 8), is located to pass through below the return spring holder 336 described later, and go to the back along the right side surface of the transmission case 2. And then, the tip part 270a side of the brake lever cable 270 which is held by the cable outer holder 274 is connected to the brake lever cable connecting pin 290.

Here, FIG. 17(a) is a schematic plane view of the walking type tiller 100 for explaining the course of the parking brake lever cable 270, and FIG. 17(b) is a schematic right side view which indicates the periphery of around the transmission case 2 of the walking type tiller 100 for explaining of the course of the parking brake lever cable 270.

As described above, by using the space between the belt left cover 16L which covers the belt transmission mechanism 200 from the left side thereof and the left side surface of the transmission case 2 for the course of the parking brake lever cable 270, the parking brake lever cable 270 does not protrude outside the body 1 of the walking type tiller 100, and the parking brake lever cable 270 can be prevented from being caught on an obstacle.

Additionally, as described above, by allowing the parking brake lever cable 270 to pass through below the shifter arm 91 which is fixed to the tip part of the gear shift operation lever 90 (see FIGs. 1 and 8) for the course of the parking brake lever cable 270, the parking brake lever cable 270 can be prevented from interfering with the gear shift operation lever 90 and the shifter arm 91.

Additionally, as described above, by allowing the parking brake lever cable 270 to pass through below the return spring holder 336 (see FIGs. 8, 10, 14(a) and 14(b)) for the course of the parking brake lever cable 270, the position of the parking brake lever cable 270 becomes stable, and the parking brake lever cable 270 can be prevented from interfering with the operating parts such as the rotary clutch arm 440, a rotary clutch return spring 450, the shifter arm 91, and the like.

Here, the configuration of the bracket 330 will be described with reference to FIGs. 10 and 11(a) again.

On the L-shape plate 332, a spring front pin 331, which is curved in a roughly L-shaped form in a plan view and which the other end part of the dead point getting over spring 320 is hooked on, is fixed by welding in such a manner that the spring front pin 331 is located in front of the through hole 312 in a side view (see FIG. 10).

Additionally, the above described bolt 310a which turnably supports the parking brake engaged/disengaged device 310 serves as a bolt by which the bracket 330 is fixed to the transmission case 2 using the bolt insertion hole 333a. By means of this, the number of parts can be reduced.

Since the L-shape plate 332 has a curved form in the roughly L-shaped form in a right side view, even if the driving power of the traveling second shaft 40 is applied to the parking brake pin 301, the deformation of the L-shape plate 332 hardly occurs, because the strength is stronger than that of a simple flat plate.

Since the spring front pin 331 which is curved in a roughly L-shaped form in a plan view is also fixed to the bracket 330 by welding with the L-shape plate 332, the deformation of the L-shape plate 332 can be prevented when the driving power of the traveling second shaft 40 is applied to the parking brake pin 301 by using the spring front pin 331 curved in a roughly L-shaped form as well as the L-shape plate 332 having excellent strength as a member for increasing strength.

The dead point getting over spring 320 the one end part of which is hooked on the spring rear pin 313 and the other end part of which is hooked on the spring front pin 331 is arranged approximately horizontally with respect to the body 1 of the walking type tiller.

Consequently, when the parking brake arm body 311 is turned in the direction of the arrow Q2 (see FIG. 10) and the parking brake engaged/disengaged device 310 is set to the "brake engaged-state" (see FIG. 12(b)), the tension (contraction force) of the dead point getting over spring 320 is applied in such a manner that the parking brake pin 301 is pushed to the one end part 41 of the traveling second shaft 40. By means of this, the tip part 301a of the parking brake pin 301 is always pushed to the one end part 41 of the traveling second shaft 40, so that the rotation of the traveling second shaft 40 is surely locked after the tip part 301a of the parking brake pin 301 engages with any one of two brake grooves 41a and 41a (see FIGs. 10 and 12(b)).

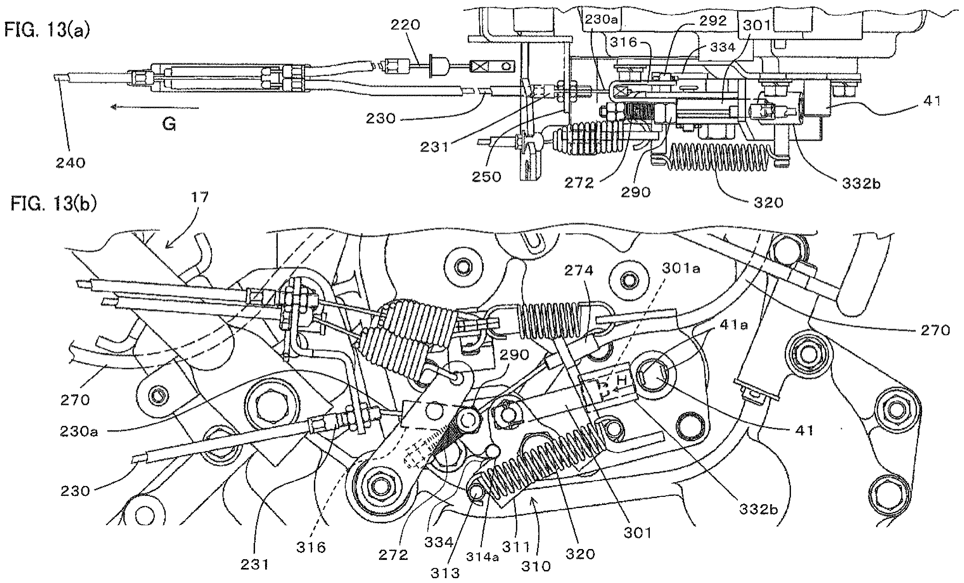

By means of this, a clearance between the spring rear pin 313 and the right traveling wheel 4R at the time of a minimum tread can be secured. That is, when the parking brake is disengaged, as shown in FIG. 13(b), the spring rear pin 313 exists downward. The outer peripheral portion of the right traveling wheel 4R exists below the spring rear pin 313. Accordingly, by arranging the spring rear pin 313 horizontally as much as possible, the clearance between the spring rear pin 313 and the right traveling wheel 4R can be secured, so that the spring rear pin 313 can be prevented from coming into contact with the right traveling wheel 4R. Usually, left and right positions of the pair of the traveling wheels of the walking type tiller can be easily changed with respect to the axle (this matter is referred to as tread changing). In the configuration of the walking type tiller 100 of the present embodiment, when the right traveling wheel 4R exists roughly under the spring rear pin 313 after the tread changing, the distance between the pair of the traveling wheels 4L and 4R is minimum.

As shown in FIG. 10, the rear part of the bracket 330 is separated in upper and lower parts. Then, a lower surface of a left end part 314a of the stopper pin 314, which exists near the transmission case 2, abuts on an upper edge 334 of the lower part separated from the upper part, so that the upper edge 334 of the bracket 330 serves as a stopper when the parking brake arm body 311 is turned in the disengaged direction.

Since a part of the bracket 330 also serves as a stopper, an independent new component is unnecessary, so that the configuration is simplified.

Incidentally, as shown in FIG. 9, the other end part 220b of the main clutch cable 220 and the other end part 230b of the brake cable 230 are arranged in one cable as a main clutch/brake cable 240, and the main clutch/brake cable 240 is connected to the main clutch lever 18 (see FIGs. 2 and 3).

The tip part 230a side of the brake cable 230 is held by a stay plate 250 which is one of the components for turnably supporting the operating handle 17 (see FIGs. 8 and 9). Additionally, the stay plate 250 holds a tip part 430a side of a rotary clutch cable 430 and a tip part 530a side of a differential lock clutch cable 530, and the rotary clutch cable 430 is arranged outside the differential lock clutch cable 530 in a plan view with respect to the left and right direction of the axle 4 (see FIG. 14(a) and FIG. 1).

By means of this, since one stay plate 250 is capable of holding the tip part 230a side of the brake cable 230, the tip part 430a side of the rotary clutch cable 430, and the tip part 530a side of the differential lock clutch cable 530, the number of the component members can be decreased, and a simple constitution can be achieved (see FIG. 2).

Since the rotary clutch cable 430 is arranged outside the differential lock clutch cable 530 in a plan view, the protrusion amount of the constitution member in the lateral direction of the body 1 can be decreased.

According to the above configuration, in a case of use only for a parking brake, it is possible to achieve space-saving of structure as compared with a conventional internal expanding brake.

The parking brake mechanism 300 is configured, as described above, by the one end part 41 of the traveling second shaft 40 which protrudes from the right side surface of the transmission case 2 to the outside thereof, two parking brake grooves 41a and 41a which are formed on the outer peripheral surface of the tip part of the one end part 41 at positions axially opposing to each other, the parking brake engaged/disengaged device 310, the bracket 330, and the like.

A cover 390 which is a resin-molded article is fitted to the transmission case 2 with screws 391a and 391b (see FIG. 8). The cover 390 covers the mechanism part such as a transmission shifter or the like, and protects the rotating sections such as the one end part 41 of the traveling second shaft 40 or the like in order to improve safety in consideration of design.

By the way, the bracket 330 is provided with the rotary clutch arm support member 335 (see FIG. 10 and FIG. 14(a)) which turnably supports a rotary clutch arm 440 at a fulcrum member 335a (see FIG. 14(a)), and the return spring holder 336 (see FIG. 10 and FIG. 14(a)) which holds one end part of a rotary clutch return spring 450 as a tension spring member, by bending each part of the bracket 330. The rotary clutch arm 440 connects the rotary clutch 400 and the tip part 430a of the rotary clutch cable 430 (see FIG. 14(a)). The rotary clutch arm support member 335 and the return spring holder 336 are not included in the parking brake mechanism 300. Consequently, by constituting the fulcrum member 335a and the rotary clutch return spring 450 integrally, variations in the dimensions can be eliminated, so that an adjusting mechanism of the rotary clutch return spring 450 can be eliminated and the number of the components can be decreased.

The above configuration and the operation of the various clutches will be described later with reference to FIG. 14(a) to FIG. 16(b).

By the way, the parking brake engaged/disengaged device 310 of the present embodiment is one example of a parking brake engaged/disengaged device of the present invention.

Additionally, in the present embodiment, when the end part of the brake lever cable 270 is connected to the parking brake engaged-operation lever 70, a junction part having a screw part is fixed to the end part of the brake lever cable 270, the screw part of the junction part is fixed to the parking brake engaged-operation lever 70, and the tensile strength of the brake lever cable 270 can be adjusted by the double nut.

Next, the operation of the main clutch lever 18, the main clutch 210, and the parking brake mechanism 300 will be described with reference to FIG. 12(a) to FIG. 13(b) mainly.

FIG. 12(a) is a schematic plan view of the parking brake mechanism 300 for explaining a state where the parking brake arm body 311 is turned to a "brake engaged-side" (see the arrow Q2 in FIG. 10) by gripping the parking brake engaged-operation lever 70 with the operator's hand in a state where the operator's hand is released from a main clutch lever 18. FIG. 12(b) is a schematic right side view of the parking brake mechanism 300 for explaining a state where the parking brake arm body 311 is turned to a "brake engaged-side" (see the arrow Q2 in FIG. 10) by gripping the parking brake engaged-operation lever 70 with the operator's hand in a state where the operator's hand is released from a main clutch lever 18. Incidentally, each of FIGs. 12(a) and 12(b) indicates the parking brake mechanism 300 in the state where the operator's hand is released from the parking brake engaged-operation lever 70 after the state of the parking brake engaged/disengaged device 310 is switched from the "brake disengaged-state" to the "brake engaged-state" by gripping the parking brake engaged-operation lever 70 with the operator's hand.

FIG. 13(a) is a schematic plan view of the parking brake mechanism 300 for explaining a state where the parking brake arm body 311 is forcibly turned to a "brake disengaged-side (that is, a brake released-side)" (see the arrow Q1 in FIG. 10) by pushing the main clutch lever 18 down by the operator, and FIG. 13(b) is a schematic right side view of the parking brake mechanism 300 for explaining a state where the parking brake arm body 311 is forcibly turned to a "brake disengaged-side (that is, a brake released-side)" (see the arrow Q1 in FIG. 10) by pushing the main clutch lever 18 down by the operator.

In a case where the operator releases a hand from the main clutch lever 18, the explanation of the actions of the walking type tiller 100 will be as follows.

At this time, the following explanation will be described in a state where the dead point getting over spring 320 has got over the dead point thereof, the lower surface of the left end part 314a of the stopper pin 314 is abutting on the upper edge 334 of the lower part of the rear part of the bracket 330 (see FIG. 10), and the parking brake engaged/disengaged device 310 (that is, the parking brake arm body 311) has been stably located to the "brake disengaged-side (brake released-side)" (see FIGs. 13(a) and 13(b)).

When the operator releases the hand from the main clutch lever 18, by the restoring force of the tension spring 214 and the torque spring 212 (see FIG. 5), the main clutch lever 18 turns upward about the first horizontal shaft 18a (see an arrow α1 in FIG. 3). At this time, the main clutch/brake cable 240 is about to be slackened, but the main clutch/brake cable 240 which is connected with the main clutch cable 220 is pulled in the direction of the arrow E (see FIG. 3 and FIG. 12(a)), because the main clutch cable 220 is pulled in the direction of the arrow B (see FIG. 5) by the restoring force of the torque spring 212 which is disposed on the tension arm 213 (see FIG. 5).

When the main clutch cable 220 is pulled in the direction of the arrow B (see FIG. 5), the tension roller 211 turns in the direction away from the transmission belt 203 (see an arrow D of FIG. 5), so that the main clutch 210 gets into a "disconnected state". By means of this, the driving power from the engine 15 is not transmitted to the transmission mechanism of the transmission case 2, and the axle 4 and the rotor shaft 5 stop their rotation.

On the other hand, when the main clutch/brake cable 240 is pulled in the direction of the arrow E (see FIG. 12(a)), the brake cable 230 which is connected with the main clutch/brake cable 240 is moved in the direction of the arrow E, but the tip part 230a of the brake cable 230 gets into a slackened state at the vicinity of the place where the tip part 230a of the brake cable 230 protrudes from a cable outer holder 231 fixed to the stay plate 250, because the parking brake engaged/disengaged device 310 is located stably at the "brake disengaged-side (brake released-side)" as described above.

At this time, the operator can switch the parking brake engaged/disengaged device 310 which is connected with the brake lever cable 270 from the "brake disengaged-state (brake released-state)" to the "brake engaged-state" by gripping the parking brake engaged-operation lever 70 which is arranged under the right side grip part 17R of the operating handle 17 with the operator's hand, because the tip part 230a of the brake cable 230 is in the slackened state.

That is, in a case where the operator grips the parking brake engaged-operation lever 70 with the operator's hand, the parking brake arm body 311 which is connected to the tip part 270a of the brake lever cable 270 through the brake lever cable connecting pin 290 turns to the direction of the arrow Q2 about the bolt 310a as an axis (see FIGs. 10 and 11(b)), because the brake lever cable 270 is pulled in the direction of the arrow G (see FIG. 3) and the tip part 270a of the brake lever cable 270 is pulled in the direction of the arrow q2 (see FIG. 11(a)).

That is, between the time when the parking brake arm body 311 starts the turn in the direction of the arrow Q2 and the time when the dead point getting over spring 320 gets over the dead point, the dead point getting over spring 320 is prolonged against the contracting force of the dead point getting over spring 320 by the turn of the parking brake arm body 311 in the direction of the arrow Q2 due to the operation of gripping the parking brake engaged-operation lever 70 with the operator's hand. But after the dead point getting over spring 320 gets over the dead point, even if the operator's hand is released from the parking brake engaged-operation lever 70, the parking brake pin 301 is moved in the direction of an arrow F (see FIG. 12(b)) and the tip part 301a of the parking brake pin 301 is always pushed to the one end part 41 of the traveling second shaft 40 by the contracting force of the dead point getting over spring 320. Here the contracting force of the dead point getting over spring 320 acts on the parking brake arm body 311 in a manner to turn the parking brake arm body 311 in the direction of the arrow Q2. After that, when the operator makes the walking type tiller 100 move slightly in the front or rear direction, the left and right traveling wheels 4L and 4R are rotated and the traveling second shaft 40 is rotated. And as a result, when any one of two parking brake grooves 41a and 41a which are formed on the one end part 41 comes to the position of the tip part 301a of the parking brake pin 301, the tip part 301a is inserted into the parking brake groove 41a (see FIG. 12(b)).

Accordingly, the traveling second shaft 40 can be surely locked without a slip, and even if the walking type tiller 100 exists on the slope or the sloping farm field, the operation of the parking brake can be ensured (see FIG. 12(b)). Additionally, the parking brake engaged-operation lever 70 is disposed on the operating handle 17 where the operation by the operator is easy, so that after a stop of the pair of right and left traveling wheels 4R and 4L, the operator can switch the parking brake engaged/disengaged device 310 from the "brake disengaged-state" to the "brake engaged-state" immediately. By means of this, the operability improves.

Additionally, since the traveling second shaft 40 is provided with two parking brake grooves 41a and 41a, the brake can be exerted earlier as compared with a case where a traveling second shaft is provided with only one parking brake groove.

Next, in a case where the operator pushes down the main clutch lever 18, the explanation of the actions of the walking type tiller 100 will be as follows.

At this time, the following explanation will be described under the conditions in which the parking brake engaged/disengaged device 310 is located at the "brake engaged-side", and the tip part 301a of the parking brake pin 301 is inserted into the parking brake groove 41a (see FIG. 12(b)) just before the main clutch lever 18 is pushed down. Additionally, at this time, assume that the operator's hand is released from the parking brake engaged-operation lever 70.

When the operator pushes down the main clutch lever 18 (see an arrow α2 in FIG. 3), the main clutch/brake cable 240 is pulled in the direction of the arrow G (see FIG. 3 and FIG. 13(a)), and at the same time, the main clutch cable 220 and the brake cable 230 which are connected with the main clutch/brake cable 240 are pulled in the direction of the arrow G.

When the main clutch cable 220 is pulled in the direction of the arrow G (see FIG. 13(a)), the tension roller 211 is turned in the direction of pushing up the transmission belt 203, and as a result, the main clutch 210 gets into the "connected state". By means of this, the driving power from the engine 15 is transmitted to the transmission mechanism of the transmission case 2, and the rotation of the axle 4 is begun and the rotation of the rotor shaft 5 becomes possible.

On the other hand, when the brake cable 230 is pulled in the direction of the arrow G (see FIG. 13(a)), the parking brake engaged/disengaged device 310 which is located at the "brake engaged-side" until just before the pulling of the brake cable 230 is forcibly moved to the "brake disengaged-side (brake released-side)". As a result, the tip part 301a of the parking brake pin 301 moves in the direction of an arrow H (see FIG. 13(b)) and comes out from the parking brake groove 41a, and the lock state of the traveling second shaft 40 is released.

That is, when the brake cable 230 is pulled in the direction of the arrow G (see FIG. 13(a)), the tip part 230a of the brake cable 230 is pulled in the direction of the arrow q1 (see FIGs. 10 and 11(a)). As a result, the parking brake arm body 311 which is connected to the tip part 230a of the brake cable 230 through the bifurcated member 316 and the brake lever cable connecting pin 290 turns to the direction of the arrow Q1 about the bolt 310a as an axis (see FIG. 10).

Additionally, in a case where the parking brake engaged/disengaged device 310 is located on the "brake engaged-side" just before the main clutch lever 18 is pushed down, the operator's hand is released from the parking brake engaged-operation lever 70. As a result, the compression coil spring 272 is extended by its elastic force, and the tip part 270a of the brake lever cable 270 is pushed in the direction of an arrow P (see FIG. 11(a)). Under this situation, in a case where the main clutch lever 18 is pushed down and the tip part 230a of the brake cable 230 is pulled in the direction of the arrow q1 (see FIGs. 10 and 11(a)), the movement in the direction of the arrow Q1 of the parking brake arm body 311 is permitted by allowing the compression coil spring 272 which is in an extended state till then to be compressed.

Accordingly, when the operator pushes down the main clutch lever 18 to make the main clutch 210 be set to the "connected state", the parking brake engaged/disengaged device 310 is forcibly turned to the "brake disengaged-side (brake released-side)" in a manner interlocking the movement of the main clutch lever 18 and the lock state of the traveling second shaft 40 is automatically released. By means of this, the walking type tiller 100 having safety and excellent operability can be provided.

When the parking brake engaged/disengaged device 310 is forcibly moved to the "brake disengaged-side (brake released-side)", in a state where the dead point getting over spring 320 has got over the dead point thereof, the lower surface of the left end part 314a of the stopper pin 314 abuts on the upper edge 334 of the lower part of the rear part of the bracket 330 due to the contraction force of the dead point getting over spring 320, and the parking brake engaged/disengaged device 310 is kept in a stopping state at the position of the "brake disengaged-side (brake released-side)".

In the case of the walking type tiller 100 of the present embodiment, in a side view (see FIG. 3), a distance (a first arm length) between the first horizontal shaft 18a which is an axis of rotation for the main clutch lever 18 and the rear end part 18b of the main clutch lever 18, which is pushed by the operator's hand, is set much longer than a distance (a second arm length) between the bolt 70a which is an axis of rotation for the parking brake engaged-operation lever 70 and the grip part 70b of the parking brake engaged-operation lever 70 which is gripped by the operator's hand.

In the case where the main clutch lever 18 is pushed down, that is, in the case where the main clutch 210 is set to the "connected state", the parking brake engaged/disengaged device 310 is kept at the position of the "brake disengaged-side (brake released-side)" as described above. Accordingly, in that case, even if the operator tries to grip the parking brake engaged-operation lever 70 so as to make the parking brake engaged/disengaged device 310 turn to the "brake engaged-side", the operator cannot turn the parking brake engaged-operation lever 70, because of the relationship between both the first arm length and the second arm length (the relationship of an arm ratio between both the arm lengths). That is, because the operation force for keeping the "connected state" of the main clutch 210 by the main clutch lever 18 is much larger than the operation force for allowing the parking brake engaged/disengaged device 310 to be turned to the "brake engaged-side" by the parking brake engaged-operation lever 70, the operator cannot turn the parking brake engaged-operation lever 70.

Accordingly, when the main clutch 210 is kept in the "connected state" by pushing down the main clutch lever 18, the parking brake engaged/disengaged device 310 can be prevented from switching to the "brake engaged-side", and the protection of the transmission mechanism of the traveling system can be performed.

Next, the above explanations are put in order, and they are indicated below.
1. When the parking brake engaged/disengaged device 310 is located in the "brake disengaged-state (brake released-state)", the operator can set the main clutch 210 to the "connected state" by pushing down the main clutch lever 18 by hand, and can set the main clutch 210 to the "disconnected state" by releasing operator's hand from the main clutch lever 18.
2. When the operator releases the hand from the main clutch lever 18, that is, when the main clutch 210 is in the "disconnected state", the parking brake engaged-operation lever 70 can be operated so that parking brake engaged/disengaged device 310 is switched from the "brake disengaged-state" to the "brake engaged-state".
3. When the operator pushes down the main clutch lever 18 by hand, that is, when the main clutch 210 is in the "connected state", the parking brake engaged/disengaged device 310 is kept in the "brake disengaged-state (brake released-state)" and the parking brake engaged-operation lever 70 cannot be operated to the "brake engaged-side" due to the relationship of an arm ratio described above. As for the main clutch lever 18, if the operator does not continue to push down the main clutch lever 18, the "connected state" of the main clutch 210 cannot be kept. Accordingly, when the operator releases the hand from the main clutch lever 18, the main clutch 210 is automatically set to the "disconnected state", so that the safe operation can be achieved.
4. Even when the parking brake engaged/disengaged device 310 is located in the "brake engaged-state", the operator can set the main clutch 210 to the "connected state" by pushing down the main clutch lever 18 by hand. At this time, as described above, the parking brake engaged/disengaged device 310 is forcibly switched to the "brake disengaged-state (brake released-state)", and the lock state of the traveling second shaft 40 is released simultaneously.

Next, the configuration which relates to the operation of the rotary clutch 400 and the differential lock clutch 500 will be described with reference to FIG. 14(a) and FIG. 14(b) mainly.

FIG. 14(a) is a partial schematic plan view of the right side part of the transmission case 2 in a case where the operator operates to move the rotary/differential lock clutch lever 20 to the "disconnected side (see an arrow β1 in FIG. 3), that is, the operator operates to set both the rotary clutch 400 (see FIG. 7) and the differential lock clutch 500 (see FIG. 6) to the "disconnected-state". FIG. 14(b) is a partial schematic side view of the right side part of the transmission case 2 which is shown in FIG. 14(a).

As for the same configurations as those which are explained in FIGs. 8 to 10, the same reference numerals are used in FIG. 14(a) and FIG. 14(b), and the explanation will be omitted.

As shown in FIG. 14(a), the rotary clutch arm 440 is a roughly L-shaped plate in a plan view, and has one side part 440a of the L-shaped plate and the other side part 440b. The other end part of the rotary clutch return spring 450 as a tension spring member is caught in a spring hole 441 which is formed on the tip part of the other side part 440b side, and the tip part of the other side part 440b is turnably connected to the one end part 421a of the shifter shaft 421 which is a part of the rotary clutch shifter 420. Additionally, the tip part 430a of the rotary clutch cable 430 is caught in the spring hole 441.

Additionally, the one side part 440 a side of the rotary clutch arm 440 is provided with the lower side hole for fixing rotary clutch 442 between the fulcrum member 335a and the spring hole 441. When the rotary clutch cable 430 is pulled in the direction of the arrow H (see FIG. 14(a)), the rotary clutch arm 440 is turned about the fulcrum member 335a in a plan view and in a clockwise direction, and the one end part 421a of the shifter shaft 421, which is connected to the other side part 440b, is slid in the direction of the arrow K (see FIG. 7 and FIG. 14(a)), so that the rotary clutch 400 (see FIG. 7) gets into the "connected state". Here, the lower side hole for fixing rotary clutch 442 is a hole which is used for forcibly keeping the "connected state" of the rotary clutch 400.

Therefore, the tip part of the rotary clutch arm support member 335 is also provided with an upper side hole for fixing rotary clutch 335b at the superposed position which is superposed on the position of the lower side hole for fixing rotary clutch 442 in a plan view, when the rotary clutch 400 is located in the "connected state".

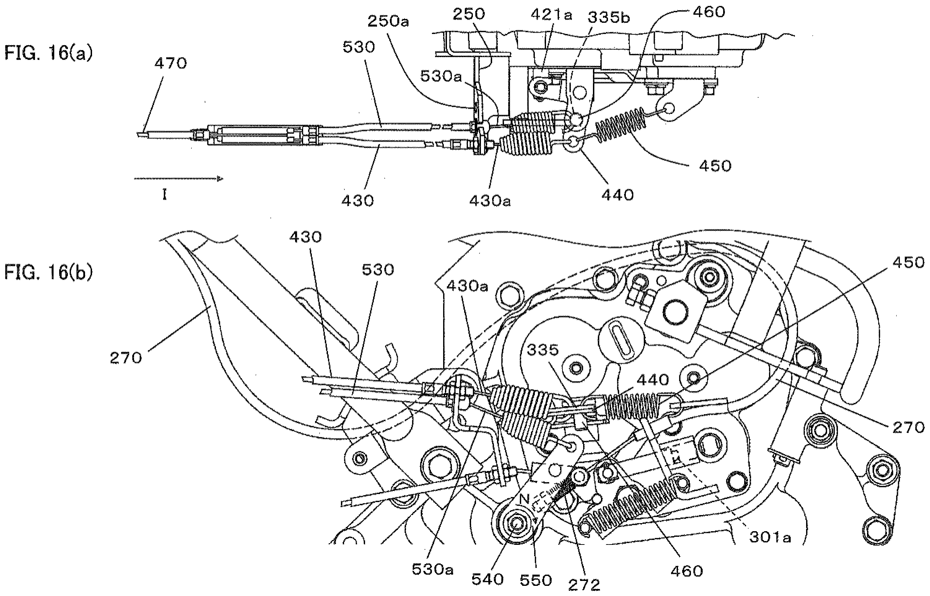

When the upper side hole for fixing rotary clutch 335b and the lower side hole for fixing rotary clutch 442 are superposed on each other, the operator removes a rotary clutch fixing pin 460 from the stay plate 250, and inserts the rotary clutch fixing pin 460 into the above described superposed holes which are composed of the upper side hole for fixing rotary clutch 335b and the lower side hole for fixing rotary clutch 442. And as a result, since the position of the rotary clutch arm 440 is fixed, the "connected state" of the rotary clutch 400 can be kept regardless of the operation of the rotary/differential lock clutch lever 20. Here, the rotary clutch fixing pin 460 has a columnar shape which is provided with a flange on the one end thereof, and is preliminarily inserted in the holding hole for rotary clutch fixing pin 250a (see FIG. 16(a)) which is formed on the stay plate 250.

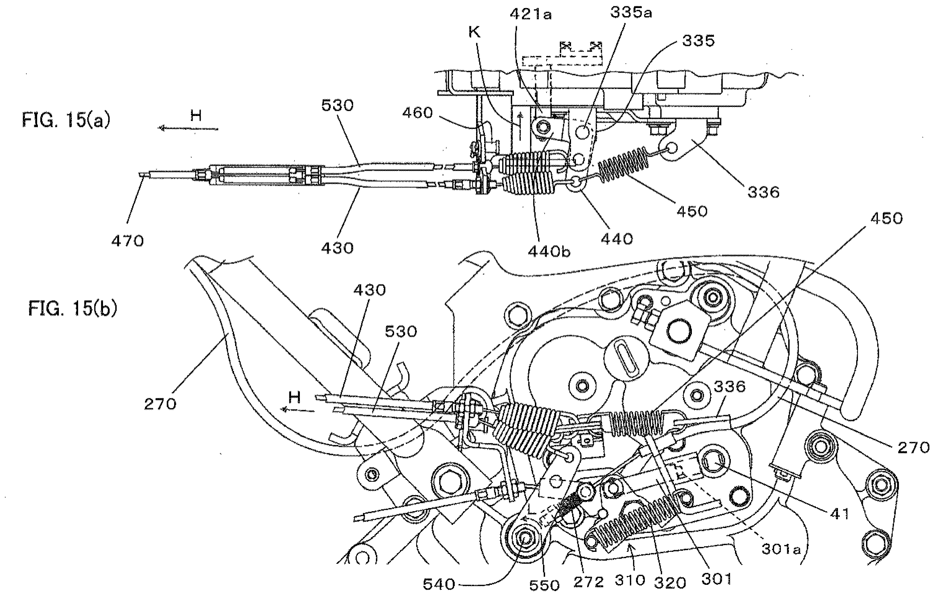

Since the holding hole for rotary clutch fixing pin 250a (see FIG. 16(a)), which is used for holding the rotary clutch fixing pin 460 (see FIG. 15(a)) before inserting the rotary clutch fixing pin 460 into the superposed holes and after removing it from the superposed holes, is disposed on the stay plate 250, the size of the rotary clutch arm 440 can be decreased, so that the protrusion amount of the rotary clutch arm 440 in the lateral direction of the body 1 can be decreased.

Additionally, the differential lock arm shaft 540 protrudes from the right side surface of the transmission case 2, and a long plate-like differential lock arm 550 is fixed on the tip part of the differential lock arm shaft 540. The position from which the differential lock arm shaft 540 protrudes is located behind the parking brake engaged/disengaged device 310 and below the stay plate 250. The tip part 530a of the differential lock clutch cable 530 is caught in the hole which is disposed on the tip part of the differential lock arm 550. Incidentally, as described above, the double nut 273 of the parking brake engaged/disengaged device 310 does not interfere with the movable members such as the long plate-like differential lock arm 550, and the like.

Next, based on the above configuration which includes the rotary/differential lock clutch lever 20, the rotary clutch 400, and the differential lock clutch 500, each operation will be described with reference to FIG. 14(a) to FIG. 16(b).

FIG. 15(a) is a partial schematic plan view of the right side part of the transmission case 2 in a case where the operator operates to move the rotary/differential lock clutch lever 20 to the "connected side (see an arrow β2 in FIG. 3), that is, the operator operates to set both the rotary clutch 400 (see FIG. 7) and the differential lock clutch 500 (see FIG. 6) to the "connected state". FIG. 15(b) is a partial schematic side view of the right side part of the transmission case 2 which is shown in FIG. 15(a).

FIG. 16(a) is a partial schematic plan view of the right side part of the transmission case 2 in a case where the operator operates to move the rotary/differential lock clutch lever 20 to the "disconnected side", after the rotary clutch fixing pin 460 is inserted in the superposed holes in a state where the operator moves the rotary/differential lock clutch lever 20 to the "connected side" and both the upper side hole for fixing rotary clutch 335b and the lower side hole for fixing rotary clutch 442 are superposed on each other. FIG. 16(b) is a partial schematic side view of the right side part of the transmission case 2 which is shown in FIG. 16(a).

As for the same configurations as those which are explained in FIG. 8 to FIG. 10, FIG. 14(a) and FIG. 14(b), here, the same reference numerals are used, and the explanation will be omitted.

As for FIG. 14(a) to FIG. 16(b), the parking brake pin 301 is not inserted into the parking brake groove 41a.

Here, a situation will be described, in which the operator makes the walking type tiller 100 take a turn in a case of traveling and tilling in the farm field so as to make the walking type tiller 100 move to the neighboring ridge to continue the working after reaching the end of one ridge of the farm field.

Here, according to the walking type tiller 100 of the present embodiment, when the operator makes the walking type tiller 100 take a turn, the operator can select whether or not the rotation of the tilling claws 6 is stopped.

First of all, a situation will be described, in which the operator can make the walking type tiller 100 stop the rotation of the tilling claws 6 in correspondence with the operation of the rotary/differential lock clutch lever 20 when the operator makes the walking type tiller 100 take a turn, with reference to FIG. FIG. 14(a) and FIG. 14(b).

In this situation, as shown in FIG. 14(a), the rotary clutch fixing pin 460 is inserted in the holding hole for rotary clutch fixing pin 250a (see FIG. 16(a)) which is formed on the stay plate 250.

When the operator makes the walking type tiller 100 take a turn to move to the neighboring ridge, the operator pulls the rotary/differential lock clutch lever 20 backward which was tilted forward until just before the operation of pulling the rotary/differential lock clutch lever 20 (see the arrow β1 in FIG. 3) so as to make the walking type tiller 100 stop the rotation of the tilling claws 6 and make the differential lock for the left and right traveling wheels 4L and 4R be released (that is, the differential function is operated). By means of this, the rotary clutch cable 430 and the differential lock clutch cable 530 are pulled in the direction of an arrow I (see FIG. 14(a)), and a rotary/differential lock clutch cable 470 is pulled in the direction of an arrow I (see FIG. 3 and FIG. 14(a)) by the restoring force of the spring member 512 (see FIG. 6) which is disposed on the differential lock clutch 500 side and by the restoring force of the rotary clutch return spring 450.

Accordingly, the rotary clutch arm 440 turns in a counterclockwise direction in a plan view about the fulcrum member 335a, and the one end part 421a of the shifter shaft 421, which is connected to the other side part 440b, slides in the direction of the arrow J, so that the rotary clutch 400 (see FIG. 7) gets into the "disconnected state" and the rotation of the tilling claws 6 is stopped.

On the other hand, as described above, the differential lock clutch 500 gets into the "disconnected state", that is, the differential lock clutch 500 is put in a state where the differential function is operated by the restoring force of the spring member 512 (see FIG. 6). Then, the operator makes the walking type tiller 100 take a turn by slightly lifting the operating handle 17 so that the lower end parts of the tilling claws 6 are roughly maintained at the position slightly apart from the ground surface.

According to the above operation, for example, even an unskilled operator for the tilling work can concentrate the consciousness of the operator on performing the smooth turning operation by allowing the differential function to be operated, while ensuring safety by stopping the rotation of the tilling claws 6.

Next, after the turning operation of the walking type tiller 100 is completed, the operator pushes the rotary/differential lock clutch lever 20 forward which was put in a rising state until just before the operation of pushing the rotary/differential lock clutch lever 20 (see the arrow β2 in FIG. 3) so as to make the walking type tiller 100 resume a rotation of the tilling claws 6 and make the differential lock for the left and right traveling wheels 4L and 4R be operated (that is, the differential function is released). By means of this, the rotary/differential lock clutch cable 470 is pulled in the direction of the arrow H (see FIG. 3 and FIG. 15(a)), and the rotary clutch cable 430 and the differential lock clutch cable 530 are pulled in the direction of the arrow H (see FIG. 15(a) and FIG. 15(b)).

Accordingly, the rotary clutch arm 440 turns in a clockwise direction in a plan view about the fulcrum member 335a, and the one end part 421a of the shifter shaft 421, which is connected to the other side part 440b, slides in the direction of the arrow K, so that the rotary clutch 400 (see FIG. 7) gets into the "connected state" and the rotation of the tilling claws 6 is started.

On the other hand, as described above, the differential lock clutch cable 530 is pulled in the direction of the arrow H (see FIG. 15(b)). By means of this, the differential lock arm 550 turns in a counterclockwise direction in a right side view (see an arrow L in FIG. 4 and FIG. 15(b)), the differential lock connecting member 513 is pulled, and the differential lock clutch arm 520 is allowed to be turned in the direction of the arrow M (see FIG. 6). And as a result, the second claws 511 are allowed to be engaged with the first claws 61, and the differential lock clutch 500 gets into the "connected state", that is, the differential lock clutch 500 is put in a state where the differential function is suspended.

Next, a situation in which, for example, a skilled operator for the tilling work makes the walking type tiller 100 take a turn will be described with reference to FIG. 16(a) and FIG. 16(b) mainly.

The skilled operator may desire to make the differential lock be released (that is, the differential function is operated) for ensuring the smooth turn and make the tilling claws 6 continue the rotation, when making the walking type tiller 100 take a turn.

When the skilled operator starts the tilling work in the farm field, the skilled operator pushes the rotary/differential lock clutch lever 20 forward (see the arrow β2 in FIG. 3). By means of this, the rotary/differential lock clutch cable 470 is pulled in the direction of the arrow H (see FIG. 3 and FIG. 15(a)), and the rotary clutch cable 430 and the differential lock clutch cable 530 are pulled in the direction of the arrow H (see FIG. 15(a) and FIG. 15(b)).

By means of this operation, since the rotary clutch arm 440 turns in a clockwise direction in a plan view about the fulcrum member 335a (see FIG. 15(a)), the lower side hole for fixing rotary clutch 442, which is disposed on the rotary clutch arm 440, and the upper side hole for fixing rotary clutch 335b, which is disposed on the rotary clutch arm support member 335, are superposed on each other.

Then, for satisfying the desire described above, in the situation where the two holes are superposed on each other, the skilled operator removes the rotary clutch fixing pin 460 which is inserted in the holding hole for rotary clutch fixing pin 250a of the stay plate 250, and inserts the rotary clutch fixing pin 460 into the above described superposed holes from the upper side hole for fixing rotary clutch 335b (see FIG. 16(a)).

Accordingly, since the position of the rotary clutch arm 440 is fixed, the "connected state" of the rotary clutch 400 can be kept regardless of the operation of the rotary/differential lock clutch lever 20.

After performing the above described operation, the skilled operator pushes down the main clutch lever 18 (see an arrow α2 in FIG. 3), and the forward travel and the tilling work of the walking type tiller 100 are started.

After that, when the tilling work is performed from one end to the other end of one ridge of the farm field and the skilled operator makes the walking type tiller 100 take a turn so as to make the walking type tiller 100 move to the neighboring ridge to continue the tilling work, the skilled operator pulls the rotary/differential lock clutch lever 20 backward which was tilted forward until just before the operation of pulling the rotary/differential lock clutch lever 20 (see the arrow β1 in FIG. 3).

By means of this, the differential lock arm 550 is turned in a direction of an arrow N (see FIG. 4 and FIG. 16(b)) and the differential lock clutch cable 530 is pulled in the direction of the arrow I (see FIG. 16(a)), and the rotary/differential lock clutch cable 470 is pulled in the direction of the arrow I (see FIG. 3 and FIG. 16(a)) by the restoring force of the spring member 512 (see FIG. 6) which is disposed on the differential lock clutch 500 side.

As described above, the differential lock clutch 500 gets into the "disconnected state", that is, the differential lock clutch 500 is put in a state where the differential function is operated by the restoring force of the spring member 512 (see FIG. 6).

On the other hand, as described above, since the rotation of the rotary clutch arm 440 is locked by the rotary clutch fixing pin 460, the "connected state" of the rotary clutch 400 is kept and the rotation of the tilling claws 6 is continued.

Accordingly, the skilled operator can make the walking type tiller 100 take a turn, while continuing the rotation of the tilling claws 6 and releasing the differential lock for the left and right traveling wheels 4L and 4R (that is, the differential function is operated).

Incidentally, such an operation method in which the differential function is operated may be performed regardless of whether or not the operator is a skilled operator. For example, usually, the ridge of the farm field is formed straightly, but there may be a ridge formed curvedly. Therefore, when performing the tilling work along the curved ridge, such an operation method is used by the unskilled operator as well as the skilled operator.

By the way, in the above described embodiment, a case is described where the parking brake engaged-operation lever 70 and the handle height change lever 80 are arranged in the positions symmetrical with respect to the center line on the operating handle 17 in a plan view (see FIG. 2). However, the present invention is not limited to the above described configuration. For example, the parking brake engaged-operation lever 70 may be arranged between the right side grip part 17R and the base part 17b of the operating handle 17, and in front of the rotary/differential lock clutch lever 20 and an operation panel 20b (see FIG. 2). By means of this, it is easy to distinguish the parking brake engaged-operation lever 70 from another one, and the erroneous operation can be prevented.

Additionally, in the above described embodiment, a case is described where the end part 41 of the traveling second shaft 40 is provided with two parking brake grooves 41a and 41a. However, the present invention is not limited to the above described configuration. For example, the number of the parking brake grooves 41a which are formed over an outer circumferential side surface of the end part 41 of the traveling second shaft 40 may be three or more.

Additionally, in the above described embodiment, a case is described where the parking brake pin 301, which is provided with one tip part 301a formed into the projection shape such as a truncated cone, is used as one example of an engagement member of the present invention. However, the present invention is not limited to the above configuration. For example, another configuration, in which another engagement member as another example of an engagement member of the present invention has plural projection parts formed in the shape of a gear on the tip part and a part of the plural projection parts can be engaged with an engaged part which is formed on the one end part of the driving shaft which protrudes outside the transmission case, may be used. In short, the present invention can have any engagement member as long as the configuration is capable of locking the rotation of the driving shaft which protrudes outside the transmission case.

Additionally, in the above described embodiment, a case is described where the one end part 41 of the traveling second shaft 40 is provided with the parking brake grooves 41a as one example of an engaged part of the present invention, and where the parking brake pin 301, which is provided with the tip part 301a formed into the projection shape such as a truncated cone, is used as one example of an engagement member of the present invention. However, the present invention is not limited to the above configuration. For example, another configuration, in which the one end part 41 of the traveling second shaft 40 is provided with a projection part as another example of an engaged part of the present invention, and in which the parking brake pin 301 having the tip part 301a provided with a recess part which is capable of engaging with the projection part is used as another example of an engagement member of the present invention, may be used.

Additionally, regarding the relation between an engaged part of a driving shaft of the present invention and an engagement member of the present invention, which is capable of engaging with the engaged part, it is not necessarily required that an engaged part and an engagement member are engaged with each other without a gap. That is, any configuration can be used as long as the rotation of the driving shaft is locked. For example, as another configuration, a gap may be arranged between an engaged part of a driving shaft and an engagement member when the engaged part and the engagement member are engaged with each other. That is, for example, another configuration may be used, in which an engaged part is a recess part and an engagement member is a projection part, and the width of the recess part in the axial direction of the driving shaft of the traveling system of the transmission mechanism is formed to be longer than the width of the projection part in the direction corresponding to the axial direction of the driving shaft of the traveling system. Additionally, for example, still another configuration may be used, in which an engaged part is a recess part and an engagement member is a projection part, and the width of the recess part in the direction orthogonal to the axial direction of the driving shaft of the traveling system of the transmission mechanism is formed to be longer than the width of the projection part in the direction corresponding to the direction orthogonal to the axial direction of the driving shaft of the traveling system.

Additionally, in the above described embodiment, as one example of a driving shaft whose one end part protrudes outside the transmission case of the present invention, a case is described where the traveling second shaft 40 protrudes outside the transmission case 2 from the transmission mechanism. However, the present invention is not limited to the above described configuration. For example, another configuration, in which the traveling first shaft 30 or another driving shaft of the traveling system is protruded outside the transmission case 2 from the transmission mechanism, may be used.

Additionally, in the above described embodiment, a case is described where the parking brake engaged-operation lever 70 is disposed on the right side grip part 17R of the operating handle 17 and the handle height change lever 80 is disposed on the left side grip part 17L of the operating handle 17. However, the present invention is not limited to the above described configuration. For example, another configuration, in which the parking brake engaged-operation lever 70 is disposed on the left side grip part 17L of the operating handle 17 and the handle height change lever 80 is disposed on the right side grip part 17R of the operating handle 17, may be used.
A walking type tiller according to the present invention is capable of surely locking the movement of the traveling wheels even when the walking type tiller is on the slope or the inclined farm field, and the operation of a parking brake operation part of the walking type tiller can be performed easily, so that the present invention is useful for a
walking type tiller.

## Claims

1. A walking type tiller comprising:
traveling wheels (4L, 4R);
an operating handle (17) which is arranged behind the traveling wheels (4L, 4R);
tilling claw (6) which tills a farm filed;
an engine (15) which rotates the traveling wheels (4L, 4R) and the tilling claw (6); and
a transmission case (2) housing a transmission mechanism which transmits driving power from the engine to the traveling wheels (4L, 4R) and the tilling claw (6),
**characterized in that** the walking type tiller comprises
a driving shaft of the transmission mechanism (40), whose one end part (41) protrudes outside the transmission case (2), the one end part (41) being provided with an engaged part (41a);
a parking brake engaged/disengaged device (310) which has an engagement member (301) capable of engaging with the engaged part (41a) of the driving shaft (40), and by which a rotation of the driving shaft (40) is switched between a stopping state and a releasing state; and
a parking brake operation part (70) which performs an operation so that the parking brake engaged/disengaged device (310) stops the rotation of the driving shaft (40),
wherein the parking brake operation part (70) is disposed on the operating handle (17), and
in a case where the parking brake operation part (70) is operated, the engagement member (301) engages with the engaged part (41a), so that the rotation of the driving shaft (40) is stopped.

2. The walking type tiller according to claim 1, comprising:
a height adjusting part (81) which adjusts a height of the operating handle (17); and
a height operating part (80) which operates the height adjusting part (81),
wherein the operating handle (17) has a right side grip part (17R) and a left side grip part (17L),
the parking brake operation part (70) is disposed under any one of the right side grip part (17R) and the left side grip part (17L), and
the height operating part (80) is disposed under another one of the right side grip part (17R) and the left side grip part (17L).

3. The walking type tiller according to claim 1 or 2, comprising:
a belt transmission mechanism (200) which is disposed between the engine (15) and the transmission mechanism, and which is configured in such a manner to be capable of transmitting the driving power from the engine (15) to the transmission mechanism by a belt (203), and
a connection member (270) which transmits the operation performed by the parking brake operation part (70) to the parking brake engaged/disengaged device (310),
wherein the connection member (270) is arranged so as to pass between the belt (203) and the transmission case (2).

## Patentansprüche

1. Einachsige Bodenfräse, Folgendes umfassend:
Laufräder (4L, 4R),
einen Betätigungshebel (17), der hinter den Laufrädern (4L, 4R) angeordnet ist,
Fräsmesser (6), das ein Feld eines Landwirtschaftsbetriebs fräst,
Motor (15), der die Laufräder (4L, 4R) und das Fräsmesser (6) dreht, und
ein Transmissionsgehäuse (2), das einen Transmissionsmechanismus beherbergt, der Antriebskraft von dem Motor auf die Laufräder (4L, 4R) und das Fräsmesser (6) überträgt,
**dadurch gekennzeichnet, dass** die einachsige Bodenfräse Folgendes umfasst:
eine Antriebswelle des Transmissionsmechanismus (40), deren einer Endteil (41) aus dem Transmissionsgehäuse (2) hervorsteht, wobei der eine Endteil (41) mit einem in Eingriff stehenden Teil (41a) versehen ist,
eine Handbremse-Eingriffs-/Lösungsvorrichtung (310), die ein Eingriffselement (301) aufweist, das in der Lage ist, mit dem in Eingriff stehenden Teil (41a) der Antriebswelle (40) in Eingriff zu gelangen, und durch das eine Drehung der Antriebswelle (40) zwischen einem Haltezustand und einem Freigabezustand geschaltet wird, und
einen Handbremse-Betätigungsteil (70), der eine Betätigung ausführt, so dass die Handbremse-Eingriffs-/Lösungsvorrichtung (310) die Drehung der Antriebswelle (40) anhält,
wobei der Handbremse-Betätigungsteil (70) an dem Betätigungshebel (17) angeordnet ist und
in dem Fall, dass der Handbremse-Betätigungsteil (70) betätigt wird, das Eingriffselement (301) in Eingriff mit dem in Eingriff stehenden Teil (41a) gelangt, so dass die Drehung der Antriebswelle (40) angehalten wird.

2. Einachsige Bodenfräse nach Anspruch 1, Folgendes umfassend:
einen Höheneinstellungsteil (81), der eine Höhe des Betätigungshebels (17) einstellt, und
einen Höhenbetätigungsteil (80), der den Höheneinstellungsteil (81) betätigt, wobei der Betätigungshebel (17) einen rechtsseitigen Griffteil (17R) und einen linksseitigen Griffteil (17L) aufweist,
wobei der Handbremse-Betätigungsteil (70) unter einem von dem rechtsseitigen Griffteil (17R) und dem linksseitigen Griffteil (17L) angeordnet ist, und
der Höhenbetätigungsteil (80) unter einem von dem rechtsseitigen Griffteil (17R) und dem linksseitigen Griffteil (17L) angeordnet ist.

3. Einachsige Bodenfräse nach Anspruch 1 oder 2, Folgendes umfassend:
einen Riementransmissionsmechanismus (200), der zwischen dem Motor (15) und dem Transmissionsmechanismus angeordnet ist und der derart gestaltet ist, dass er in der Lage ist, die Antriebskraft von dem Motor (15) über einen Riemen (203) auf den Transmissionsmechanismus zu übertragen, und
ein Verbindungselement (270), das die von dem Handbremse-Betätigungsteil (70) ausgeführte Betätigung auf die Handbremse-Eingriffs-/Lösungsvorrichtung (310) überträgt,
wobei das Verbindungselement (270) derart angeordnet ist, dass es zwischen dem Riemen (203) und dem Transmissionsgehäuse (2) verläuft.

## Revendications

1. Motoculteur comprenant :
des roues mobiles (4L, 4R) ;
une poignée de commande (17) qui est agencée derrière les roues mobiles (4L, 4R) ;
une griffe de labour (6) qui laboure un champ agricole ;
un moteur (15) qui fait tourner les roues mobiles (4L, 4R) et la griffe de labour (6) ; et
un boîtier de transmission (2) logeant un mécanisme de transmission qui transmet la puissance d'entraînement du moteur aux roues mobiles (4L, 4R) et à la griffe de labour (6),
**caractérisé en ce que** le motoculteur comprend :
un arbre d'entraînement du mécanisme de transmission (40), dont une partie d'extrémité (41) fait saillie à l'extérieur du boîtier de transmission (2), la une partie d'extrémité (41) étant prévue avec une partie mise en prise (41a) ;
un dispositif mis en prise / dégagé de frein de stationnement (310) qui a un élément de mise en prise (301) pouvant se mettre en prise avec la partie mise en prise (41a) de l'arbre d'entraînement (40), et grâce auquel une rotation de l'arbre d'entraînement (40) est commutée entre un état d'arrêt et un état de libération ; et
une partie de commande de frein de stationnement (70) qui réalise une commande de sorte que le dispositif mis en prise / dégagé de frein de stationnement (310) arrête la rotation de l'arbre d'entraînement (40),
dans lequel la partie de commande de frein de stationnement (70) est disposée sur la poignée de commande (17), et
dans le cas dans lequel la partie de commande de frein de stationnement (70) est actionnée, l'élément de mise en prise (301) se met en prise avec la partie mise en prise (41a), de sorte que la rotation de l'arbre d'entraînement (40) est arrêtée.

2. Motoculteur selon la revendication 1, comprenant :
une partie d'ajustement de hauteur (81) qui ajuste une hauteur de la poignée de commande (17) ; et
une partie de commande de hauteur (80) qui commande la partie d'ajustement de hauteur (81),
dans lequel la poignée de commande (17) a une partie de préhension du côté droit (17R) et une partie de préhension du côté gauche (17L),
la partie de commande de frein de stationnement (70) est disposée sous l'une quelconque parmi la partie de préhension du côté droit (17R) et la partie de préhension du côté gauche (17L), et
la partie de commande de hauteur (80) est disposée sous une autre parmi la partie de préhension du côté droit (17R) et la partie de préhension du côté gauche (17L).

3. Motoculteur selon la revendication 1 ou 2, comprenant :
un mécanisme de transmission à courroie (200) qui est disposé entre le moteur (15) et le mécanisme de transmission, et qui est configuré afin de pouvoir transmettre la puissance d'entraînement du moteur (15) au mécanisme de transmission par une courroie (203), et
un élément de raccordement (270) qui transmet la commande réalisée par la partie de commande de frein de stationnement (70) au dispositif mis en prise / dégagé de frein de stationnement (310),
dans lequel l'élément de raccordement (270) est agencé pour passer entre la courroie (203) et le boîtier de transmission (2).
